# EUROPEAN PATENT APPLICATION

(11) **EP 4 300 398 A1**
(43) Date of publication of application: **03.01.2024**
(21) Application number: 22855147.9
(22) Date of filing: 11.07.2022
(51) Int. Cl.: G06Q 20/38

(54) **SMART CONTRACT-BASED DATA PROCESSING METHOD AND APPARATUS, ELECTRONIC DEVICE, COMPUTER-READABLE STORAGE MEDIUM, AND COMPUTER PROGRAM PRODUCT**

(30) Priority: 12.08.2021 CN 202110923438
(71) Applicant: Tencent Technology (Shenzhen) Company Limited, Shenzhen, Guangdong 518057 (CN)
(72) Inventor: LAN, Hu, Shenzhen, Guangdong 518057 (CN); WANG, Zongyou, Shenzhen, Guangdong 518057 (CN); SHI, Yifang, Shenzhen, Guangdong 518057 (CN); LIU, Hanqing, Shenzhen, Guangdong 518057 (CN); ZHU, Gengliang, Shenzhen, Guangdong 518057 (CN); LIU, Qucheng, Shenzhen, Guangdong 518057 (CN); LIAO, Zhiyong, Shenzhen, Guangdong 518057 (CN); LIU, Pan, Shenzhen, Guangdong 518057 (CN)
(74) Representative: Gunzelmann, Rainer
(86) International application number: PCT/CN2022/104894
(87) International publication number: WO 2023/016164

(57) **Abstract**

A smart contract-based data processing method and apparatus, a device, a computer-readable storage medium, and a computer program product. The smart contract-based data processing method comprises: a service node acquiring an initial contract call request used to execute a transaction service; querying, on the basis of a first contract identifier and a first mapping relationship, a second contract identifier associated with a target on-chain contract, calling a target local contract on the basis of the second contract identifier, and executing a local service indicated by the transaction service by means of calling the target local contract, obtaining a local transaction execution result; sending a target contract call request to a consensus node on the basis of the local transaction execution result and the initial contract call request; and the consensus node calling the target on-chain contract on the basis of the first contract identifier in the target contract call request, and executing a consensus service indicated by the transaction service by means of calling the target on-chain contract.

## Description

### RELATED APPLICATION

This application is based upon and claims priority to Chinese Patent Application No. 202110923438.7, filed on August 12, 2021, which is incorporated by reference in its entirety.

### FIELD OF THE TECHNOLOGY

The present disclosure relates to the technical field of blockchains, and in particular, to a smart contract-based data processing method and apparatus, an electronic device, a computer-readable storage medium, and a computer program product.

### BACKGROUND OF THE DISCLOSURE

In a blockchain system, a smart contract is a code that may be understood and executed by each node on a blockchain, and may execute any logic and obtain a result. The smart contract may be understood to be an executable program, while the blockchain may be understood to be an operating system that provides a program running environment. In practice, the smart contract may be managed and tried through transactions on the blockchain.

In the blockchain network, a service object may invoke smart contracts already deployed on the blockchain by initiating a transaction. All the smart contracts are deployed and run on consensus nodes in the blockchain network. Each consensus node respectively runs the smart contract specified by the transaction. For the smart contract required for data reading, each consensus node will access respective account books. Finally, each consensus node will mutually verify whether execution results are consistent (reach a consensus). If yes, the execution results are stored in the respective account books, and the execution results are returned to the service object. The execution results may also be synchronized to other types of nodes. In this way, the number of data storage and the operation workload of the consensus nodes are greater. Furthermore, the consensus nodes are heavily loaded, thereby affecting data processing efficiency.

### SUMMARY

Embodiments of the present disclosure provide a smart contract-based data processing method and apparatus, an electronic device, a computer-readable storage medium, and a computer program product, which can reduce the load of a consensus node and improve data processing efficiency.

An embodiment of the present disclosure provides a smart contract-based data processing method. The method is performed by a service node in a service network. The service node includes at least one electronic device. The method includes:
obtaining an initial contract invocation request for executing a transaction service, the initial contract invocation request including a first contract identifier for invoking a target on-chain contract, the target on-chain contract being deployed on a consensus node of a core consensus network, the core consensus network being independent of the service network, both the consensus node and the service node storing a first mapping relationship between the first contract identifier and a second contract identifier, the second contract identifier being a contract identifier of a target local contract deployed on the service node;
querying, based on the first contract identifier and the first mapping relationship, the second contract identifier, determining the target local contract based on the second contract identifier, and executing, by invoking the target local contract, a local service indicated by the transaction service to obtain a local transaction execution result;
transmitting a target contract invocation request to the consensus node based on the local transaction execution result and the initial contract invocation request, and executing, by invoking the target on-chain contract, a consensus service indicated by the transaction service, the target contract invocation request being used for invoking, by the consensus node, the target on-chain contract based on the first contract identifier.

An embodiment of the present disclosure provides a smart contract-based data processing method. The method is performed by a consensus node in a core consensus network. The consensus node includes at least one electronic device. The method includes:
obtaining a target contract invocation request for executing a transaction service, the target contract invocation request being transmitted by a service node based on a local transaction execution result and an initial contract invocation request, the service node being located in a service network of the core consensus network, the local transaction execution result being obtained by invoking a target local contract by the service node to execute a local service indicated by the transaction service, the target local contract being obtained by the service node based on a second contract identifier, the second contract identifier being queried by the service node based on a first contract identifier and a first mapping relationship, the first contract identifier referring to a contract identifier for invoking a target on-chain contract in the initial contract invocation request, the initial contract invocation request being used for executing the transaction service, the target on-chain contract being deployed on the consensus node, both the consensus node and the service node storing the first mapping relationship between the first contract identifier and the second contract identifier, the second contract identifier being a contract identifier of the target local contract deployed on the service node; and
invoking the target on-chain contract based on the first contract identifier in the target contract invocation request, and executing, by invoking the target on-chain contract, a consensus service indicated by the transaction service to obtain a chain transaction execution result.

An embodiment of the present disclosure provides a smart contract-based first data processing apparatus. The first data processing apparatus is stored in a service node of a service network. The first data processing apparatus includes:
a first obtaining module, configured to obtain an initial contract invocation request for executing a transaction service, the initial contract invocation request including a first contract identifier for invoking a target on-chain contract, the target on-chain contract being deployed on a consensus node of a core consensus network, the core consensus network being independent of the service network, both the consensus node and the service node storing a first mapping relationship between the first contract identifier and a second contract identifier, the second contract identifier being a contract identifier of a target local contract deployed on the service node;
a second execution module, configured to query, based on the first contract identifier and the first mapping relationship, the second contract identifier, determine the target local contract based on the second contract identifier, and execute, by invoking the target local contract, a local service indicated by the transaction service to obtain a local transaction execution result; and
a forwarding module, configured to transmit a target contract invocation request to the consensus node based on the local transaction execution result and the initial contract invocation request, and execute, by invoking the target on-chain contract, a consensus service indicated by the transaction service, the target contract invocation request being used for obtaining, by the consensus node, the target on-chain contract based on the first contract identifier.

An embodiment of the present disclosure provides a smart contract-based second data processing apparatus. The second data processing apparatus is stored in a consensus node of a core consensus network. The second data processing apparatus includes:
a second obtaining module, configured to obtain a target contract invocation request for executing a transaction service, the target contract invocation request being transmitted by a service node based on a local transaction execution result and an initial contract invocation request, the service node being located in a service network of the core consensus network, the local transaction execution result being obtained by invoking a target local contract by the service node to execute a local service indicated by the transaction service, the target local contract being obtained by the service node based on a second contract identifier, the second contract identifier being queried by the service node based on a first contract identifier and a first mapping relationship, the first contract identifier referring to a contract identifier for invoking a target on-chain contract in the initial contract invocation request, the initial contract invocation request being used for executing the transaction service, the target on-chain contract being deployed on the consensus node, both the consensus node and the service node storing the first mapping relationship between the first contract identifier and the second contract identifier, the second contract identifier being a contract identifier of the target local contract deployed on the service node; and
a second execution module, configured to invoke the target on-chain contract based on the first contract identifier in the target contract invocation request, and execute, by invoking the target on-chain contract, a consensus service indicated by the transaction service to obtain a chain transaction execution result.

An embodiment of the present disclosure provides an electronic device, including: a processor, a memory, and a network interface, the processor being connected to the memory and the network interface, the network interface being configured to provide a data communication function, the memory being configured to store a computer program, and the processor being configured to invoke the program codes to perform the smart contract-based data processing method performed by a service node in a service network according to the foregoing embodiment of the present disclosure, or to perform the smart contract-based data processing method performed by a consensus node in a core consensus network according to the foregoing embodiment of the present disclosure.

An embodiment of the present disclosure provides a computer-readable storage medium, storing a computer program, the computer program being adapted to be loaded by a processor and to perform the smart contract-based data processing method performed by a service node in a service network according to the foregoing embodiment of the present disclosure, or to perform the smart contract-based data processing method performed by a consensus node in a core consensus network according to the foregoing embodiment of the present disclosure.

An embodiment of the present disclosure provides a computer program product, including a computer program or instruction which, when executed by a processor, performs the smart contract-based data processing method performed by a service node in a service network according to the foregoing embodiment of the present disclosure, or performs the smart contract-based data processing method performed by a consensus node in a core consensus network according to the foregoing embodiment of the present disclosure.

In the embodiments of the present disclosure, a target local contract is deployed on a service node in a service network independent of a core consensus network, and a first mapping relationship between a first contract identifier and a second contract identifier corresponding to the target local contract is set. Before a consensus node of the core consensus network invokes a target on-chain contract deployed on the consensus node to execute a consensus service indicated by a transaction service, the service node in the service network may first obtain an initial contract invocation request for executing the transaction service, execute a local service indicated by the transaction service, and obtain a local transaction execution result. Furthermore, the service node may determine a target contract invocation request based on the local transaction execution result and the initial contract invocation request, and forward the target contract invocation request to the consensus node to execute the consensus service indicated by the transaction service. That is to say, before executing the consensus service, the service node may perform corresponding processing on the received contract invocation request before the consensus node, so that the local service executed on the consensus node is moved to the service node for processing, thereby reducing the resource consumption of the consensus node for executing the local service, reducing the load of the consensus node, and improving the transaction processing efficiency of a blockchain network.

### BRIEF DESCRIPTION OF THE DRAWINGS

To describe the technical solutions of the embodiments of the present disclosure more clearly, the following briefly introduces the accompanying drawings required for describing the embodiments of the present disclosure. Apparently, the accompanying drawings in the following description show only some embodiments of the present disclosure, and a person of ordinary skill in the art may still derive other drawings from these accompanying drawings without creative efforts.
FIG. 1 is a schematic diagram of a hierarchical structure of a blockchain network according to an embodiment of the present disclosure.
FIGS. 2a-2b are schematic diagrams of a data processing scenario according to an embodiment of the present disclosure.
FIG. 3 is a schematic flowchart of a smart contract-based data processing method according to an embodiment of the present disclosure.
FIG. 4 is a schematic flowchart of a smart contract-based data processing method according to an embodiment of the present disclosure.
FIGS. 5a-5c are schematic diagrams of a data processing scenario according to an embodiment of the present disclosure.
FIG. 6 is a schematic flowchart of a smart contract-based data processing method according to an embodiment of the present disclosure.
FIG. 7 is a schematic flowchart of another smart contract-based data processing method according to an embodiment of the present disclosure.
FIG. 8 is a schematic flowchart of a data processing method according to an embodiment of the present disclosure.
FIG. 9 is a schematic structural diagram of a smart contract-based first data processing apparatus according to an embodiment of the present disclosure.
FIG. 10 is a schematic structural diagram of a smart contract-based second data processing apparatus according to an embodiment of the present disclosure.
FIG. 11 is a schematic structural diagram of a computer device according to an embodiment of the present disclosure.

### DESCRIPTION OF EMBODIMENTS

The technical solutions in embodiments of the present disclosure are clearly and completely described in the following with reference to the accompanying drawings in the embodiments of the present disclosure. Apparently, the described embodiments are merely some rather than all of the embodiments of the present disclosure. Based on the embodiments of the present disclosure, all other embodiments obtained by a person of ordinary skill in the art without creative efforts shall fall within the protection scope of the present disclosure.

Before the embodiments of the present disclosure are further described in detail, nouns and terms in the embodiments of the present disclosure are described, and the nouns and terms in the embodiments of the present disclosure are applicable to the following explanations.
1) Transaction is equivalent to a computer term "transaction", includes operations to be submitted to a blockchain network for execution, and does not refer solely to transactions in a business context. As the term "transaction" is used conventionally in a blockchain technology, the embodiments of the present disclosure follow this convention.
   For example, a deploy transaction is used for installing a specified smart contract to a node in the blockchain network, and the smart contract is ready to be invoked. An invoke transaction is used for adding a record of a transaction in a blockchain by invoking a smart contract, and performing operations on a state database of the blockchain, including an update operation (including a write operation (including addition and deletion of key-value pair data) and a delete operation) and a query operation (namely, querying a key-value pair in the state database).
2) The blockchain is a storage structure of encrypted and chained transactions formed by blocks.
   For example, a header of each block may include both hash values of all the transactions in the block and hash values of all the transactions in the previous block, so as to realize anti-tampering and anti-forgery of the transactions in the block based on the hash values. After the newly generated transactions are filled into the blocks and reach the consensus of nodes in the blockchain network, the transactions are added to a tail of the blockchain to form a chain growth.
3) The blockchain network incorporates new blocks into a set of nodes of the blockchain in a consensus manner.
4) Smart contracts, also referred to as chaincodes or application codes, are programs deployed in the nodes of the blockchain network. The nodes execute the smart contracts invoked in the received transactions to update or query the key-value pair data of the state database.

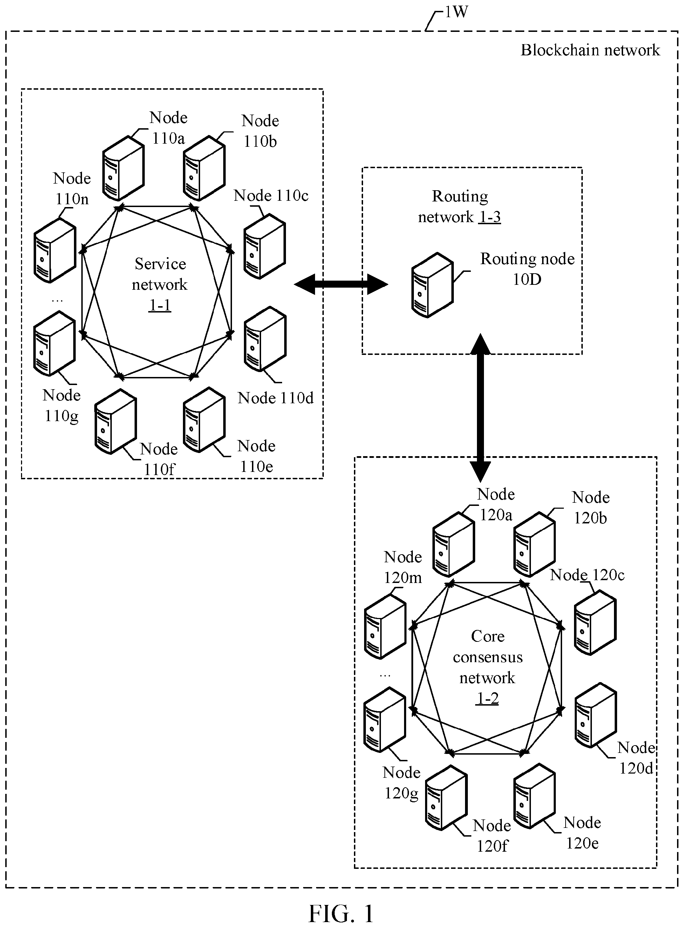

Reference is made to FIG. 1. FIG. 1 is a schematic diagram of a hierarchical structure of a blockchain network according to an embodiment of the present disclosure. The blockchain is a novel application mode of computer a technology, such as distributed data storage, peer to peer transmission, consensus mechanisms, and encryption algorithms. The blockchain is used for sorting data in chronological order, and encrypting the data into an account book, so that the data cannot be tampered and forged, and the data may be verified, stored and updated. The blockchain is essentially a decentralized database in which each node stores an identical blockchain. The nodes in the blockchain network, on a logical level, may be mapped by one or more devices (servers). The hierarchical structure of the blockchain network according to this embodiment of the present disclosure may be a blockchain network 1W shown in FIG. 1. A complete blockchain service system corresponding to the blockchain network 1W may be composed of a service network 1-1, a core consensus network 1-2, and a routing network 1-3 (also referred to as a routing proxy network) where a routing node 10D is located shown in FIG. 1.

It is to be understood that the number of routing nodes in the routing network 1-3 may be one or more and is not limited herein. This embodiment of the present disclosure is illustrated with a routing node 10D. The routing node 10D may be used for network isolation of the service network 1-1 and the core consensus network 1-2. The routing node 10D may be an independent physical server, a server cluster or a distributed system composed of a plurality of physical servers, or a cloud server providing basic cloud computing services, such as a cloud service, a cloud database, cloud computing, a cloud function, cloud storage, a network service, cloud communication, a middleware service, a domain name service, a security service, a content delivery network (CDN), and big data and artificial intelligence platforms. This is not limited herein. The routing node 10D may perform network hierarchy on a peer to peer (P2P) network to form a hierarchical structure of "service network 1-1-core consensus network 1-2", and thus can improve the confidentiality and security of data on the blockchain.

The service network 1-1 (namely, a witness network) and the core consensus network 1-2 shown in FIG. 1 are independent of each other (that is, the core consensus network 1-2 is a separate network with respect to the service network 1-1, and has no sharing node with the service network). A blockchain node system (namely, a first blockchain node system) corresponding to the service network 1-1 may include one or more blockchain nodes. The number of nodes in the first blockchain node system will not be limited herein. For example, the first blockchain system may specifically include node 110a, node 110b, node 110c, ..., node 110n. It is to be understood that in this embodiment of the present disclosure, a blockchain node in the service network 1-1 may be referred to as a service node. The service node does not need to participate in an accounting consensus for executing a transaction service so as to obtain transaction data associated with the transaction service. The service node here may be a full node including a complete blockchain database, or may be a simplified payment verification (SPV) node storing part of data in the blockchain database. The service node will not be limited herein. In order to reduce the waste of storage space of the service node, the service node in this embodiment of the present disclosure may be illustrated as an SPV node. The service node stores part of transaction data, and obtains block header data and part of authorization visible block data (for example, transactions associated with the service node) from the core consensus network 1-2 shown in FIG. 1 through the routing node 10D.

A blockchain node system (namely, a second blockchain node system) corresponding to the core consensus network 1-2 shown in FIG. 1 may also include one or more blockchain nodes. The number of nodes in the second blockchain node system will not be limited here. For example, the second blockchain system may specifically include node 120a, node 120b, node 120c, ..., node 120m. It is to be understood that in this embodiment of the present disclosure, a node in the core consensus network 1-2 may be referred to as a consensus node (namely, an accounting node). The consensus node may run a blockchain consensus protocol. The consensus node in this embodiment of the present disclosure may be a full node including a complete blockchain database. The consensus node may participate in verification and broadcasting of transaction data and block information, and may discover and maintain connections with other nodes.

It is to be understood that in this embodiment of the present disclosure, the routing node, the service node, and the consensus node may be collectively referred to as a blockchain node in the blockchain network 1W. The blockchain node may be a server accessing the blockchain network 1W or a user terminal accessing the blockchain network 1W. The specific form of the blockchain node is not limited herein. It is to be understood that the service network 1-1 and the core consensus network 1-2 shown in FIG. 1 may be in different network environments. For example, in general, the service node is deployed in the public service network 1-1, while the consensus node running the blockchain consensus protocol is deployed in the private core consensus network 1-2. The two networks may interact through a routing boundary. In an implementation, both the service node and the consensus node may transmit data directly without the routing node.

It is to be understood that the blockchain system may include a smart contract. The smart contract is a code that may be understood and executed by each node (including the consensus node) of a blockchain in the blockchain system, and may execute any logic and obtain a result. In this embodiment of the present disclosure, smart contracts deployed and running only on the service node of the service network 1-1 may be collectively referred to as a local contract, and smart contracts deployed on the consensus node of the core consensus network 1-2 may be collectively referred to as a on-chain contract. A service object (which may be a user requesting to execute a transaction service or a user requesting to deploy a smart contract) may invoke the smart contract (which may be the local contract or the on-chain contract) already deployed in the blockchain system by initiating a contract invocation request (which may also be referred to as a transaction service request) through a client on a user terminal. It is to be understood that the blockchain system may include one or more smart contracts. These smart contracts may be differentiated by a contract identifier (for example, an identity document (ID) or a name, or a contract address or a contract function name (also referred to as a contract method name)). In the contract invocation request initiated by the client, the ID or name of the smart contract may also be carried, thereby specifying a smart contract required to be run by the blockchain. If the smart contract specified by the client is a contract required for data reading, the relevant node will access the local storage to read data. For transactions to be uploaded, finally, various consensus nodes will mutually verify whether execution results are consistent (namely, perform consensus). If yes, the execution results may be stored in respective local accounts, and the execution results may be returned to the client.

In this embodiment of the present disclosure, the on-chain contract specified to be invoked by the service object may be referred to as a target on-chain contract (that is, a pre-selected on-chain contract), and a contract identifier of the target on-chain contract may be referred to as a first contract identifier. Similarly, the local contract associated with the target on-chain contract may be referred to as a target local contract, and a contract identifier of the target local contract may be referred to as a second contract identifier. A consensus node and a node memory of a service node deployed with the target local contract both store a mapping relationship between the first contract identifier and the second contract identifier, and the mapping relationship may be referred to as a first mapping relationship. The service node herein specifically refers to a node in the service network 1-1 having an execution permission for the target local contract, and a node (for example, node 110a shown in FIG. 1) may be specified as the service node by the service object in the service network 1-1 shown in FIG. 1. That is to say, the target local contract is deployed and runs on the service node.

In this embodiment of the present disclosure, the service node may first obtain an initial contract invocation request transmitted by a first user terminal. The first user terminal herein refers to a user terminal that transmits the initial contract invocation request. The initial contract invocation request includes a first contract identifier which may be used for executing a relevant transaction service. Then, a second contract identifier associated with a target on-chain contract is queried in a node memory of the service node based on the first contract identifier and a first mapping relationship, a target local contract may then be obtained based on the second contract identifier, and the target local contract may be invoked to execute a local service indicated by the transaction service, so as to obtain a local transaction execution result. Next, the service node may determine a target contract invocation request based on the local transaction execution result and the initial contract invocation request. After executing the local service, the target contract invocation request obtained may be the same as the initial contract invocation request or may be different from the initial contract invocation request. Subsequently, the service node may forward the target contract invocation request to the consensus node. After receiving the target contract invocation request, the consensus node may obtain a target on-chain contract based on the first contract identifier in the target contract invocation request, and may then invoke the target on-chain contract to execute a consensus service indicated by the transaction service, so as to obtain a chain transaction execution result. Finally, a block (namely, a to-be-uploaded block) to be added to a blockchain may be generated according to the chain transaction execution result, and the block may be uploaded. The blockchain is a blockchain to which the target on-chain contract belongs.

The local contract provided in this embodiment of the present disclosure is a special contract which is not executed at the consensus node but only executed at the service node. The service node may first invoke the target local contract to execute the corresponding local service by specifying the target on-chain contract associated with the target local contract in the initial contract invocation request, and then the consensus node invokes the target on-chain contract to execute the corresponding consensus service. For example, for a blockchain established by the State General Administration, provincial administrations may be accessed as service nodes. In addition to meeting relevant national requirements, each province may have a different policy. At this moment, the service nodes of each province may deploy different local contracts to serve only this province. On the one hand, the local contract may be checked and calculated in advance to relieve the pressure of the consensus node. On the other hand, the local contract may access and utilize local service data, so that the local service data is not required to be uploaded, thereby reducing the storage pressure of the consensus node, while better protecting the privacy thereof.

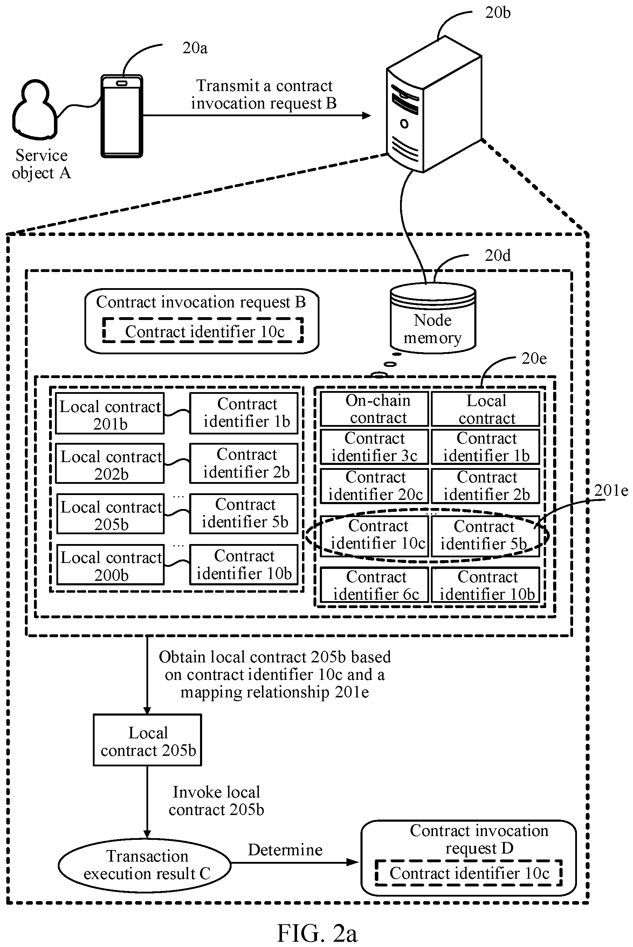

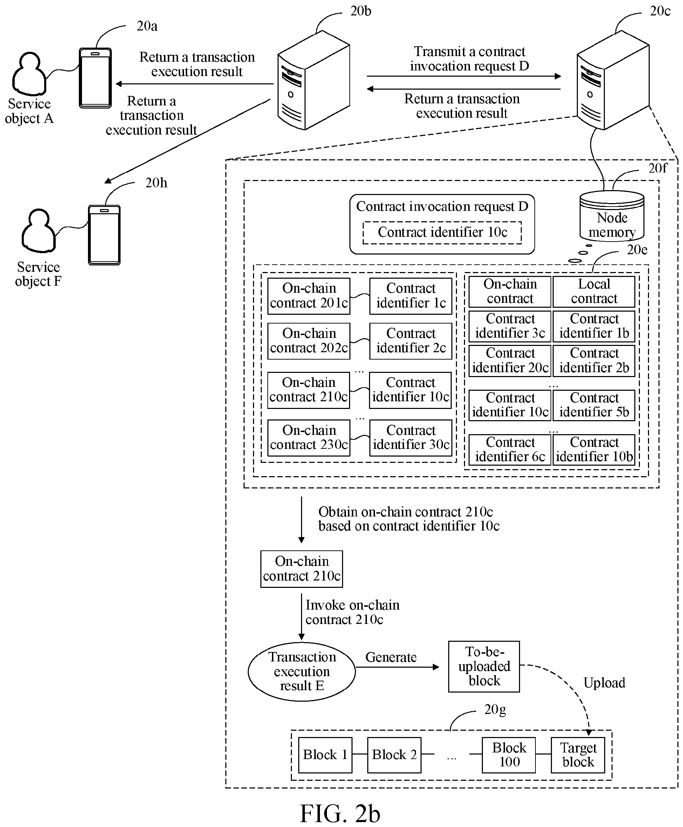

Reference is made to FIGS. 2a-2b. FIGS. 2a-2b are schematic diagrams of a data processing scenario according to an embodiment of the present disclosure. A user terminal 20a in FIGS. 2a-2b has a binding relationship with a service object A. The user terminal 20a may invoke a smart contract (a on-chain contract or a local contract) already deployed by initiating a contract invocation request. A service node 20b in FIGS. 2a-2b may be a service node with a local contract deployed in a service network. The service node 20b may be any one of the service nodes in the service network 1-1 in FIG. 1, for example, node 110a. A consensus node 20c in FIG. 2b may be a consensus node with a on-chain contract deployed in a core consensus network. The consensus node 20c may be any one of the consensus nodes in the core consensus network 1-2 in FIG. 1, for example, node 120a.

It is to be understood that the service node with the local contract deployed in the service network may invoke the local contract to execute a local service indicated by a transaction service, and any consensus node with the on-chain contract deployed in the core consensus network may invoke the on-chain contract to execute a consensus service indicated by the transaction service. For example, the transaction service herein may be an asset transfer service. The asset transfer service may be used for transferring virtual assets such as game currency, game diamonds, and electronic bills. The type of virtual assets will not be limited herein. For another example, the transaction service herein may be a file transfer service. The file transfer service may be used for transferring electronic files in various forms such as electronic contracts and electronic official documents. In addition, the transaction service herein may also be a query service, a storage service, or the like. This is not limited in the present disclosure. It is to be noted that when the local contract is deployed on the service node, an associated on-chain contract may be specified so that some data of the on-chain contract may be multiplexed.

As shown in FIG. 2a, any one of the service nodes (for example, the service node 20b) in the service network may deploy one or more local contracts (referred to as preset local contracts). Each local contract may perform different functions. The service node has an execution permission for the one or more local contracts. That is to say, the service node may invoke the local contract deployed on the service node. For example, the service node is the service node 20b. A plurality of (for example, 10) local contracts may be deployed on the service node 20b, and may include local contract 201b, local contract 202b, ..., local contract 210b. Relevant information of these local contracts may be stored in a node memory 20d of the service node 20b, and may also be stored in other storage modules of the service node 20b. Each local contract may be distinguished by using a unique contract identifier (for example, an ID or a name). For example, the contract identifier corresponding to local contract 201b is contract identifier 1b, the contract identifier corresponding to local contract 205b is contract identifier 5b, and the contract identifier corresponding to local contract 210b is contract identifier 10b. As shown in FIG. 2b, any consensus node (for example, the consensus node 20c) in the core consensus network may deploy one or more on-chain contracts, and the on-chain contracts deployed on each consensus node are the same. Each on-chain contract may also perform different functions. For example, the consensus node is the consensus node 20c. A plurality of (for example, 30) on-chain contracts may be deployed on the consensus node 20c, and may include on-chain contract 201c, on-chain contract 202c, ..., on-chain contract 230b. Relevant information of these on-chain contracts may be stored in a node memory 20f of the consensus node 20c, and may also be stored in other storage modules of the consensus node 20c. Each on-chain contract may be distinguished by using a unique contract identifier (for example, an ID or a name). For example, the contract identifier corresponding to on-chain contract 201c is contract identifier 1c, the contract identifier corresponding to on-chain contract 210c is contract identifier 10c, and the contract identifier corresponding to on-chain contract 230c is contract identifier 30c.

It is to be noted that each local contract may establish an association relationship with one or more on-chain contracts. In an implementation, a mapping relationship between a contract identifier of a local contract and a contract identifier of a on-chain contract associated with the local contract may be used for representing an association relationship therebetween, and the mapping relationships may be stored in a node memory or other storage modules of the consensus node and the associated service node in the form of a relationship mapping table. Reference is made to FIG. 2a again. As shown in FIG. 2a, a relationship mapping table 20e is stored in the node memory 20d of the service node 20b, and one or more mapping relationships may be stored in the relationship mapping table 20e. For example, the mapping relationship between contract identifier 3c and contract identifier 1b indicates that on-chain contract 203c is associated with local contract 201b. The mapping relationship between contract identifier 20c and contract identifier 2b indicates that on-chain contract 220c is associated with local contract 202b. Similarly, as shown in FIG. 2b, the relationship mapping table 20e may also be stored in a node memory 20f of the consensus node 20c. It is to be understood that the relationship mapping table 20e only includes mapping relationships relevant to the service node 20b, and mapping relationships relevant to other service nodes may also be stored in the node memory 20f. This embodiment of the present disclosure is illustrated only with the relationship mapping table 20e.

As shown in FIG. 2a, the service object A may transmit a contract invocation request B (referred to as an initial contract invocation request) to the service node 20b through the user terminal 20a (referred to as a first user terminal). The contract invocation request B may be used for executing a transaction service initiated by the service object A (for example, the service object A transfers a virtual asset with the amount of to-be-transferred assets to a service object F, such as a transfer of 500 yuan). The service object A may select a on-chain contract (referred to as a target on-chain contract, for example, on-chain contract 210c) which has been deployed via the user terminal 20a. That is, a contract identifier (referred to as a first contract identifier, for example, contract identifier 10c) of the on-chain contract may be specified in the contract invocation request B. Assuming that an association relationship has been previously specified between on-chain contract 210c and local contract 205b (referred to as the target local contract), there is a mapping relationship 201e (referred to as a first mapping relationship) between contract identifier 10c of on-chain contract 210c (referred to as the first contract identifier) and contract identifier 5b of local contract 205b (referred to as a second contract identifier). When receiving the contract invocation request B transmitted by the user terminal 20a, the service node 20b may query a contract identifier having the mapping relationship 201e with contract identifier 10c in the relationship mapping table 20e, may determine the queried contract identifier 5b as the second contract identifier, and may obtain local contract 205b based on contract identifier 5b. Next, the service node 20b may invoke local contract 205b to execute a local service indicated by the transaction service (for example, pre-check whether the amount of remaining assets of the service object A satisfies a transfer condition, namely, whether the amount of remaining assets of the service object A is greater than or equal to the amount of to-be-transferred assets (for example, 500 yuan)) so as to obtain a transaction execution result C (referred to as a local transaction execution result), and then may determine a contract invocation request D (referred to as a target contract invocation request) for being transmitted to the consensus node based on the transaction execution result C and the contract invocation request B. Finally, the service node 20b may forward the contract invocation request D to the consensus node (for example, the consensus node 20c) through a routing node in a routing network, or the service node 20b may forward the contract invocation request D directly to the consensus node. It is to be noted that contract identifier 10c is still included in the contract invocation request D.

In an implementation, before one or more contract invocation requests are forwarded from a service node to a core chain (namely, the core consensus network), the service node may execute corresponding local contracts for pre-checking and filtering the contract invocation requests (referred to as pre-checking processing), and only contract invocation requests satisfying an uploading condition are finally forwarded to the core chain for processing. For example, in a transfer scenario, the contract invocation request D may be a request in the contract invocation request B that satisfies a transfer condition (referred to as an uploading condition). For another example, if the service node 20b checks that the amount of remaining assets of the service object A is greater than 500 yuan, namely, the contract invocation request B satisfies the transfer condition, the contract invocation request B may be forwarded to the consensus node 20c as the contract invocation request D. Then the consensus node 20c executes an operation of transferring 500 yuan to the service object F. On the contrary, if the amount of remaining assets of the service object A is less than 500 yuan, namely, the contract invocation request B does not satisfy the transfer condition, the service node 20b may generate request failure information (for example, information for prompting that the amount of remaining assets of the service object A is insufficient) according to the transaction execution result C, and return the request failure information to the user terminal 20a.

It is to be noted that in addition to the pre-checking processing exemplified above, local services indicated by different transaction services may also contain different contents, such as information completion processing or statistical classification processing. This is not limited by this embodiment of the present disclosure.

The process in which the consensus node performs a transaction service is described below. As shown in FIG. 2b, after receiving the contract invocation request D forwarded by the service node 20b, the consensus node 20c may obtain on-chain contract 210c based on contract identifier 10c in the contract invocation request D, and may then invoke on-chain contract 210c to execute the consensus service indicated by the transaction service (for example, the service object A may execute a transfer service of 500 yuan to the service object F), so as to obtain a transaction execution result E (referred to as a chain transaction execution result). A blockchain 20g shown in FIG. 2b may be an identical blockchain shared by each consensus node in the core consensus network where the consensus node 20c is located. Each consensus node may obtain data information stored in the blockchain 20g. It is to be understood that the blockchain 20g may include a plurality (for example, 101) blocks: block 1, block 2, ..., block 100, and a target block. For example, block 1 may be referred to as a genesis block of the blockchain 20g. The target block in the blockchain 20g includes the transaction execution result E. Assuming that the consensus node 20c is a consensus node having a block generation function in the core consensus network, the consensus node 20c may generate a to-be-uploaded block to be added to the blockchain 20g according to the transaction execution result E, and upload the to-be-uploaded block. That is to say, the consensus node 20c may transmit the to-be-uploaded block to other consensus nodes in the core consensus network, so that the other consensus nodes perform block consensus on the to-be-uploaded block to obtain a block consensus result for returning to the consensus node 20c. If the block consensus result is a consensus reaching result, the consensus node 20c may then write the to-be-uploaded block as the target block to the blockchain 20g shown in FIG. 2b. That is, the target block is taken as a block following block 100. For example, the consensus node 20c may invoke on-chain contract 210c to perform a transfer transaction and modify the amount of remaining assets of the service object A and the service object F, generate a to-be-uploaded block according to the latest amount of remaining assets of the service object A and the latest amount of remaining assets of the service object F, and add the to-be-uploaded block to the blockchain 20g, so as to complete writing the latest amount of remaining assets of the service object A and the latest amount of remaining assets of the service object F into the blockchain 20g.

Subsequently, the consensus node 20c may return a transaction execution result (such as a transfer success result) to the user terminal 20a and a user terminal 20h bound with the service object F through the service node 20b. When the service object A queries the amount of remaining assets thereof through the user terminal 20a, the amount of remaining assets presented is the latest amount of remaining assets of the service object A. When the service object F queries the amount of remaining assets thereof through the user terminal 20h, the amount of remaining assets presented is the latest amount of remaining assets of the service object F.

It is to be understood that a smart contract-based data processing method according to an embodiment of the present disclosure may be applied to service scenarios such as the transfer of virtual assets (for example, game currency, game diamonds, and electronic bills) or the transfer of electronic files (for example, electronic contracts or electronic official documents), or other service scenarios where checking and calculation are performed in advance through local contracts. Since the service node may process the received contract invocation request correspondingly before the consensus node invokes the local contract, it is not necessary to perform all the operations relevant to the contract invocation request on the consensus node. Thus, the data processing pressure of the consensus node can be reduced, the load of the consensus node can be reduced, and the overall transaction processing efficiency of the blockchain network can be improved.

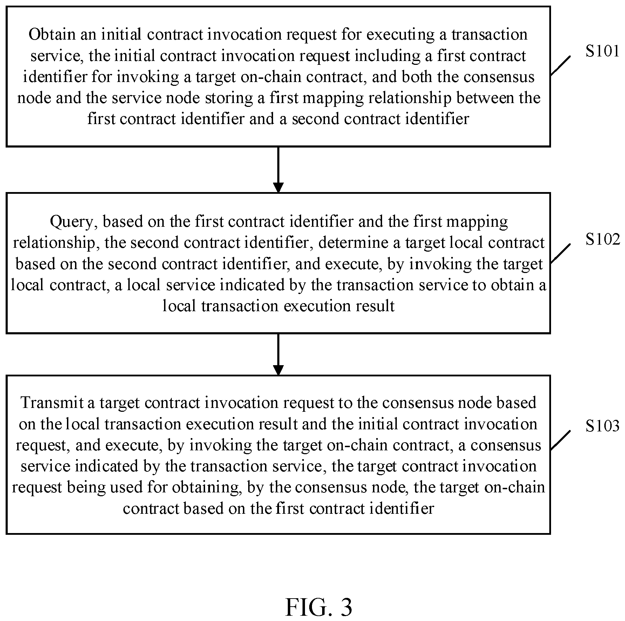

Reference is made to FIG. 3. FIG. 3 is a schematic flowchart of a smart contract-based data processing method according to an embodiment of the present disclosure. As shown in FIG. 3, the method may be performed by a service node in a service network. The service node may access to a server in the service network and may also access to a user terminal in the service network. The specific form of the service node is not limited herein. The service node may be a service node, for example, node 1 10a, with a target local contract deployed in the service network 1-1 shown in FIG. 1. The smart contract-based data processing method may include at least the following steps S101 to S103 to be described respectively:
In step S101, an initial contract invocation request for executing a transaction service is obtained, the initial contract invocation request includes a first contract identifier for invoking a target on-chain contract, and both the consensus node and the service node storing a first mapping relationship between the first contract identifier and a second contract identifier.

In this embodiment of the present disclosure, a target local contract is deployed on a specified service node in a service network, and a target on-chain contract is deployed on a consensus node of a core consensus network. The core consensus network is independent of the service network, and the two networks are isolated by a routing network. The service node may receive a transaction request (for example, a contract deployment request or an initial contract invocation request) transmitted from a user terminal, and the consensus node may receive the transaction request forwarded via the service node. The transaction request may be a request generated by the user terminal according to a transaction service initiated by a service object. In order to facilitate subsequent understanding and distinguishing, the user terminal transmitting the initial contract invocation request may be referred to as a first user terminal, and the user terminal transmitting the contract deployment request may be referred to as a second user terminal. The first user terminal and the second user terminal may be the same user terminal or may be different user terminals.

It is to be understood that the service object may deploy one or more local contracts on the service node by initiating the contract deployment request. Taking the deployment of a target local contract as an example herein, the service object may initiate a contract deployment request through the second user terminal, and the service object may deploy the target local contract on a specified service node through the contract deployment request. The specified service node may include one or more service nodes in the core consensus network.

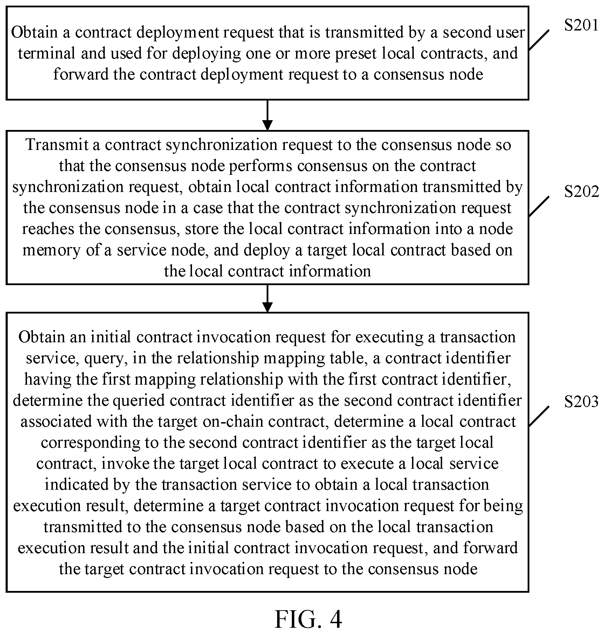

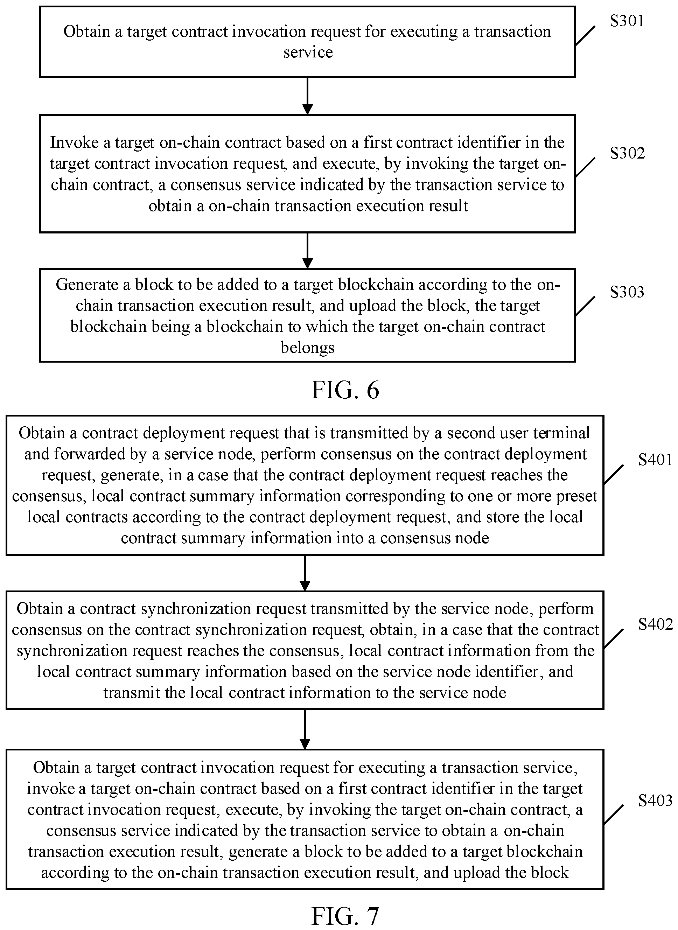

It is to be understood that the service object may uniquely identify a smart contract by specifying a contract identifier (for example, an ID or a name) of the smart contract. A blockchain node (the service node or the consensus node) may invoke the corresponding smart contract through the contract identifier. In this embodiment of the present disclosure, the contract identifier corresponding to the target on-chain contract is the first contract identifier, and the contract identifier corresponding to the target local contract is the second contract identifier. In view of this, the service object may also specify, in the contract deployment request, contract identifiers of one or more on-chain contracts associated with the target local contract. The one or more on-chain contracts include the target on-chain contract. Both the consensus node and the node memory or other storage modules (for example, a hard disk, a memory, a database, or the like) of the specified service node may store the first mapping relationship between the first contract identifier and the second contract identifier. It is to be understood that the process of deploying other local contracts is consistent with the process of deploying target local contracts, and the implementation of deploying local contracts may be described with reference to the corresponding step S201 of FIG. 4 and the corresponding step S401 of FIG. 7.

It is to be understood that upon successful deployment of the target local contract, the specified service node may return a deployment success result to the second user terminal. Thus, the service object may initiate, by the first user terminal, an initial contract invocation request for executing a transaction service (for example, an asset transfer service, a file transfer service, a query service, a storage service, or the like). The initial contract invocation request may carry a first contract identifier corresponding to a target on-chain contract specified by the service object. The first user terminal may transmit the initial contract invocation request to one or more service nodes deployed with a target local contract. The one or more service nodes, after receiving the initial contract invocation request, may invoke the target local contract associated with the target on-chain contract according to the initial contract invocation request. The implementation of invoking the target local contract may be described with reference to step S102. For ease of illustration, the subsequent steps are illustrated with only one service node.

It is to be understood that the first user terminal and the second user terminal may be different user terminals. For example, the second user terminal is user terminal A, the first user terminal is user terminal B, and the service node may transmit a deployment success result to user terminal A after the deployment is completed. The service node may also transmit the deployment success result to user terminal B, whereby user terminal B may transmit the initial contract invocation request to the service node based on the deployment success result. In this embodiment of the present disclosure, after receiving the deployment success result transmitted by the service node, user terminal A may transmit a notification to user terminal B that the deployment of the service node is completed, and then user terminal B may transmit the initial contract invocation request to the service node.

In step S 102, based on the first contract identifier and the first mapping relationship, the second contract identifier is queried, a target local contract is determined based on the second contract identifier, and by invoking the target local contract, a local service indicated by the transaction service is executed to obtain a local transaction execution result.

It is to be understood that local contract information is stored in the service node (for example, in the node memory). The local contract information refers to information relevant to the local contract (including the target local contract) deployed on the service node. The local contract information may include a mapping relationship between contract identifiers of these local contracts and contract identifiers of the associated on-chain contracts. For example, a service node A is deployed with local contract A1 and local contract A2, local contract A1 is associated with a specified on-chain contract B1, and local contract A2 is associated with a specified on-chain contract B2. Both on-chain contract B1 and on-chain contract B2 are deployed on a consensus node B. Then, the service node A may store a mapping relationship between a contract identifier of local contract A1 and a contract identifier of on-chain contract B1 and a mapping relationship between a contract identifier of local contract A2 and a contract identifier of on-chain contract B2 in local contract information stored in a node memory thereof. In addition, the consensus node B may also store these mapping relationships in a node memory thereof.

It is to be understood that the mapping relationship may be stored in a relationship mapping table. The relationship mapping table includes the first mapping relationship between the first contract identifier and the second contract identifier. An optional form of the relationship mapping table may be described with reference to the relationship mapping table 20e shown in FIG. 2a. Certainly, other forms may also be stored for storing the mapping relationship. This is not limited in the present disclosure.

In this embodiment of the present disclosure, the service node may query, in the relationship mapping table, a contract identifier having the first mapping relationship with the first contract identifier, may determine the queried contract identifier as the second contract identifier associated with the target on-chain contract, and may then determine a local contract corresponding to the second contract identifier as the target local contract.

It is to be understood that one local contract has a unique mapping relationship with one on-chain contract (that is, the local contract has a one-to-one correspondence with the on-chain contract). The relationship mapping table may include one or more mapping relationship columns. One of the mapping relationship columns may be used for storing one mapping relationship. Therefore, the service node may determine the mapping relationship column having the first contract identifier and the first mapping relationship stored in the relationship mapping table as a target mapping relationship column, and may then determine a contract identifier different from the first contract identifier stored in the target mapping relationship column as the second contract identifier. For example, referring again to FIG. 2a, the service node 20b may query (or look-up) the relationship mapping table 20e for contract identifier 5b having the mapping relationship 201e with contract identifier 10c based on contract identifier 10c and the mapping relationship 201e in the contract invocation request B. The above step 101 indicates that the first contract identifier is a contract identifier of the target on-chain contract, the second contract identifier is a contract identifier of the target local contract deployed on the service node, and there is a mapping relationship between the first contract identifier and the second contract identifier. That is, step 101 focuses on illustrating that there is a mapping relationship (i.e., the first mapping relationship) between the contract identifier of the target on-chain contract and the contract identifier of target local contract. In other words, the step 101 describes definitions of the first contract and the second contract. While, step 102 describes how to look up or determine the second contract identifier corresponding to the first contract identifier based on the first contract identifier and the first mapping relationship.

It is to be understood that the local contract information may further include a local contract function corresponding to the target local contract, and the service node may execute the local service indicated by the transaction service by invoking the local contract function. In this embodiment of the present disclosure, the service node may first read a local contract function in the local contract information by invoking the target local contract, may access local service data associated with the local service from the node memory of the service node through the local contract function, and may then execute the local service indicated by the transaction service through the local service data to obtain a local transaction execution result.

In an implementation, the local contract information may further include a contract code. The service object may deploy the contract code (namely, a contract program statement) written by the service object in the target local contract. The contract code refers to the contract program statement supporting the target local contract to execute the local service. The contract code may include a contract function name corresponding to the local contract function and a function statement corresponding to the contract function name. The service node may invoke the target local contract to obtain the contract function name corresponding to the local contract function in the local contract information, and may then obtain the function statement corresponding to the contract function name. It is to be understood that the function statement may indicate a storage position where the local service data associated with the local service in the service node (for example, in the node memory) is located. That is, the service node may transmit a data read request to the node memory of the service node through the function statement, and may then obtain the local service data at the storage position. The local service data may be used for executing the local service indicated by the transaction service.

It is to be noted that the local service data may refer to data relevant to the service object served by the service node, and the local service data may be derived from an associated user terminal, or other blockchain nodes in the blockchain network (for example, other service nodes participating in the transaction service, or superior nodes of the service node, or consensus nodes in the core consensus network).

The local service refers to a service that may be executed by the service node using the local service data, for example, checking whether a certain contract invocation request satisfies an uploading condition (referred to as pre-checking processing, for example, checking whether the contract invocation request satisfies relevant policies of the corresponding province), or completing information unique to some service nodes (referred to as information completion processing, for example, allocating an invoice number, completing an official seal or signature, or the like), or performing statistics and classification on relevant transaction data and outputting the data in a specified format (referred to as statistics and classification processing, for example, performing statistics on the number of transactions transferred by a certain company on the current day). This is not limited in the present disclosure. The pre-checking processing and the information completion processing are described below as examples, respectively.

In a scenario where the local service is pre-checked, the local contract function may include a pre-checking function associated with the local service. The service node may access first local service data associated with the local service from the service node (for example, in the node memory) through the pre-checking function, and may then perform pre-checking processing on a request parameter in the initial contract invocation request based on the first local service data. At this moment, the local service data includes the first local service data.

For example, enterprise A transfers an electronic bill to enterprise B, thereby generating relevant request parameters. The service node may search historical transaction information of the electronic bill in the node memory thereof, so as to, for example, determine whether an account of enterprise A has the electronic bill, determine whether accounts of enterprise A and enterprise B are incorrect, determine the source of the electronic bill owned by enterprise A, and determine whether the number of the electronic bill is incorrect, or the like. In response to a pre-check result indicating that the request parameter satisfies the uploading condition indicated by the local service, the request parameter satisfying the uploading condition indicated by the local service may be determined as a valid request parameter, and then the valid request parameter may be taken as the local transaction execution result corresponding to the local service. On the contrary, in response to the pre-check result indicating that the request parameter does not satisfy the uploading condition indicated by the local service, the request parameter not satisfying the uploading condition indicated by the local service may be determined as an invalid request parameter, and the invalid request parameter may be taken as the local transaction execution result corresponding to the local service. Then, the service node may generate request failure information according to the invalid request parameter and then return the request failure information to the first user terminal that transmits the initial contract invocation request. That is to say, the service node may filter or intercept contract invocation requests not satisfying the uploading condition. The request failure information indicates that the initial contract invocation request is rejected, and may include a specific reason for rejection, error information, or the like.

It is to be understood that pre-checking the initial contract invocation request on the service node may intercept some malicious or problematic requests, thereby reducing, on the one hand, the amount of calculation on the consensus node, relieving the data processing pressure of the consensus node, and reducing the number of contract invocation requests of the consensus node. On the other hand, when the consensus node does not have relevant determining capability, the service node may use own local service data for determination.

The specific content of the uploading condition is relevant to the transaction service, and will not be limited herein. For example, in an electronic bill scenario, the service node may be a service node having a target area attribute (for example, a province, a city, a region, or the like), the consensus node may be a superior node of the service node, and then the uploading condition may be a policy associated with the target area attribute (for example, a policy of a province, a policy of a city, a policy of a region, or the like). For example, a service node of a province A may pre-check whether a contract invocation request B (namely, the initial contract invocation request) for issuing an electronic bill satisfies a relevant policy of the province A. Only if the contract invocation request B satisfies the relevant policy of the province A (for example, a limit policy for a single transaction amount), the service node of the province A may re-forward the contract invocation request B to a country chain consisting of consensus nodes for subsequent processing. For another example, in a transfer scenario, the uploading condition may be that a transaction initiator has a sufficient amount of remaining assets. That is to say, when the amount of remaining assets of the transaction initiator is greater than or equal to the amount of to-be-transferred assets, the service node may forward a contract invocation request C for transfer to the consensus node, and the consensus node continues to perform the transfer operation. Otherwise, the service node may intercept the contract invocation request C.

It is to be understood that the request parameter may refer to a parameter relevant to the transaction service. The request parameter may contain different specific contents for different transaction services. For example, in an electronic bill scenario, the request parameters may include parameters relevant to circulation logic for the entire life cycle of the electronic bill. For another example, the request parameters may include electronic bill issuing information, electronic bill claim information, bill status of the electronic bill, access permission of data, keywords on the electronic bill, and the like. In the transfer scenario, the request parameter may include the amount of remaining assets of the transaction initiator, signature information, the amount of to-be-transferred assets, an identifier of a transaction receiver (such as an account number of the transaction receiver), and the like. In an electronic document scenario, the request parameter may include official seal information, signature information, status information, and the like of an electronic file.

In a scenario where the local service is information-completed, the local contract function may include an information completion function associated with the local service. The service node may access second local service data associated with the local service from the service node (for example, in the node memory) through the information completion function, and may then perform information completion processing on a request parameter in the initial contract invocation request based on the second local service data. Then, the information-completed request parameter may be taken as the local transaction execution result corresponding to the local service. At this moment, the local service data includes the second local service data. For example, in an electronic bill scenario, a provincial tax service may act as a service node that, when issuing an electronic bill, may complete some information unique to the provincial tax service, such as allocating an invoice number. For another example, in an electronic file scenario, before transferring an electronic file to the Supreme Court (namely, the consensus node) as the service node, a local court may complete official seal or signature, or the like of the local court.

It is to be understood that by deploying the local contract, the blockchain network may store some data originally stored on the consensus node on the service node, so as to use the data owned by the service node or the specific capability (such as the capability not possessed by the on-chain contract) to perform information completion (namely, data completion). Thus, multi-party interaction can be reduced, the storage pressure and calculation pressure of the consensus node can be relieved, and the privacy security of the data of the service node can also be improved.

In step S103, a target contract invocation request is transmitted to the consensus node based on the local transaction execution result and the initial contract invocation request, and by invoking the target on-chain contract, a consensus service indicated by the transaction service is executed, the target contract invocation request is used for obtaining, by the consensus node, the target on-chain contract based on the first contract identifier.

In an implementation, the blockchain network where the service network and the core consensus network are located may further include a routing network for performing network isolation. The service node may determine a target contract invocation request for being transmitted to the consensus node based on the local transaction execution result and the initial contract invocation request, and may then forward the target contract invocation request to the consensus node.

In conjunction with the foregoing step S 102, the pre-checking processing and the information completion processing are still described below as examples, respectively.

In a scenario where the local service is pre-checked, when the local transaction execution result is a valid request parameter, the service node may determine an initial contract invocation request containing the valid request parameter as a target contract invocation request. That is to say, when the request parameter in the initial contract invocation request satisfies the uploading condition indicated by the local service, the initial contract invocation request and the target contract invocation request are the same contract invocation request. On the contrary, when the local transaction execution result is an invalid request parameter, the service node may intercept the initial contract invocation request and may return request failure information to the first user terminal. It is to be understood that if the number of initial contract invocation requests is one or more, the service node may determine a contract invocation request satisfying the uploading condition among the one or more initial contract invocation requests as a target contract invocation request. In this embodiment of the present disclosure, the service node may forward the target contract invocation request to the consensus node through the routing node in the routing network. In addition, the service node may also transmit the target contract invocation request to the consensus node.

In a scenario where the local service is information-completed, the service node may generate the target contract invocation request according to the local transaction execution result and the initial contract invocation request. The target contract invocation request may include an information-completed request parameter. The information-completed request parameter may include an original request parameter in the initial contract invocation request and an updated request parameter generated after information completion processing (namely, a request parameter added with information of the service node). That is to say, the service node may add the updated request parameter to the request parameter of the initial contract invocation request. Thus, a target contract invocation request containing the information-completed request parameter may be obtained, and then the target contract invocation request may be forwarded to the consensus node through the routing node in the routing network, or the target contract invocation request may be directly transmitted to the consensus node without the aid of the routing node. It is to be understood that the initial contract invocation request and the target contract invocation request are different contract invocation requests at this moment.

For example, when issuing an electronic bill, a user terminal X1 (referred to as a first user terminal) may initiate a contract invocation request Y1 (referred to as an initial contract invocation request) for issuing an electronic bill, and the contract invocation request Y1 includes a request parameter Z1. After receiving the contract invocation request Y1, a service node X2 may allocate an invoice number for the electronic bill based on local service data thereof, generate a request parameter Z2 (referred to as an updated request parameter) according to the invoice number, and then add the request parameter Z2 to the request parameter Z1 of the contract invocation request Y1, thus obtaining a request parameter Z3 (referred to as an information-completed request parameter). Here, the contract invocation request Y1 containing the request parameter Z3 may be referred to as a contract invocation request Y2 (referred to as a target contract invocation request). The service node may then transmit the contract invocation request Y2 to a consensus node X4 through a routing node X3. In this embodiment of the present disclosure, the service node may also update relevant fields in the initial contract invocation request according to the local transaction execution result to obtain the target contract invocation request containing updated fields, and may then forward the target contract invocation request (through the routing node or not) to the consensus node, so that the consensus node may invoke the target on-chain contract to parse the updated fields into updated request parameters.

It is to be noted that in this embodiment of the present disclosure, the service node in the service network may correspond to different levels, for example, a superior-subordinate relationship (such as a county level, a municipal level, or a provincial level). After receiving an initial contract invocation request, a subordinate node may invoke a local contract deployed on the subordinate node to obtain a first contract invocation request, and then may transmit the first contract invocation request to a superior node. The superior node may invoke a local contract deployed on the superior node to obtain a second contract invocation request. In like manner, the contract invocation request obtained by the last level of service node may be taken as the target contract invocation request transmitted to the consensus node (having the highest level).

In this embodiment of the present disclosure, after receiving the target contract invocation request, the consensus node may obtain a target on-chain contract based on the first contract identifier in the target contract invocation request, and may then invoke the target on-chain contract to execute a consensus service indicated by the transaction service. The specific implementation of the consensus node executing the consensus service may be described with reference to the corresponding step S302 of FIG. 6.

It is to be noted that the target on-chain contract may be either a contract that has been successfully deployed on the consensus node or a null on-chain contract. In this embodiment of the present disclosure, when the target on-chain contract is a null contract, the consensus node does not invoke any on-chain contract. In this embodiment of the present disclosure, the service object may also directly specify the target local contract in the contract invocation request through the first user terminal. That is to say, the first user terminal may transmit the contract invocation request containing the second contract identifier to the service node deployed with the target local contract. The service node may obtain the target local contract based on the second contract identifier, may invoke the target local contract to execute the local service so as to obtain a local transaction execution result, and may then return the local transaction execution result to the first user terminal.

For example, when a service object A obtains a tax amount payable of the service object A within a time period, a contract invocation request B for calculating the tax amount may be initiated by a user terminal A1 (referred to as a first user terminal), and a contract identifier C1 (referred to as a second contract identifier) corresponding to a local contract C (referred to as a target local contract) relevant to the calculation of the tax amount may be specified in the contract invocation request B. Then the user terminal A1 may transmit the contract invocation request B to a service node A2, the service node A2 may obtain the local contract C through the contract identifier C1, and local service data D relevant to the calculation of the tax amount (for example, a tax payment policy, a tax payment formula, the income of the service object A, various expenditures, an occupied cultivated land area, or the like) may be obtained from a node memory of the service node A2 through the local contract C. Finally, the service node A2 may calculate a tax amount payable E (referred to as a local transaction execution result) of the service object A based on the local service data D, and return the tax amount payable E to the user terminal A1.

It is to be understood that the data processing load on the core consensus network caused by the deployment of new programs/services/processes on the core consensus network is reduced by performing some operations such as data statistics, query or calculation on the local contract (for example, writing some internally used codes in the local contract).

It is to be understood that other functions of the local contract may be customized by receiving custom requests from the service object for other functions of the local contract to accommodate different service scenarios in this embodiment of the present disclosure. This is not limited in the present disclosure. In addition, the contract invocation method provided by this embodiment of the present disclosure can reduce the error rate of contract invocation and facilitate the management of the smart contract, thereby improving the invocation efficiency of the smart contract. For example, each province has a different policy, and a local contract deployed by a service node of province A only serves province A, thus solving the problem that a person in province B erroneously invokes the local contract of province A.

Reference is made to FIG. 4. FIG. 4 is a schematic flowchart of a smart contract-based data processing method according to an embodiment of the present disclosure. As shown in FIG. 4, the smart contract-based data processing method may be performed by a service node in a service network. The method may include at least the following steps S201 to S203 to be described respectively:

In step S201: a contract deployment request that is transmitted by a second user terminal and used for deploying one or more preset local contracts is obtained, and the contract deployment request is forwarded to a consensus node.

In this embodiment of the present disclosure, a service object may initiate a contract deployment request used for deploying one or more preset local contracts through a second user terminal. The contract deployment request may be used for adding a contract function (for example, a local contract function corresponding to a target local contract) to each preset local contract so as to realize a corresponding function, and may also be used for specifying a node identifier corresponding to a service node (referred to as a service node deploying the preset local contract) which may execute each preset local contract in a service network. In addition, the contract deployment request is also used for specifying an associated on-chain contract (which may be an already deployed on-chain contract or a null on-chain contract on the consensus node) for the preset local contract. It is to be noted that information specified by the contract deployment request may be represented by a contract key field, and the second user terminal may generate a corresponding contract deployment request based on the contract key field and may then transmit the contract deployment request to any one service node in the service network.

In this embodiment of the present disclosure, after receiving the contract deployment request, the service node may forward the contract deployment request to any consensus node in a core consensus network through a routing node in a routing network, or directly transmit the contract deployment request to any consensus node without the aid of the routing node. After receiving the contract deployment request, the consensus node may perform consensus on the contract deployment request. When the contract deployment request reaches the consensus, the consensus node may generate local contract summary information corresponding to the one or more preset local contracts according to the contract deployment request. The local contract summary information includes information corresponding to each preset local contract. Then the local contract summary information may be stored in the consensus node (for example, in a node memory). At this moment, the one or more preset local contracts on a core chain are successfully deployed. It is to be understood that the one or more preset local contracts include the target local contract. Accordingly, the local contract summary information generated by the consensus node includes information corresponding to the target local contract. The implementation for the consensus node to perform consensus on the contract deployment request and generate local contract summary information may be described with reference to the corresponding step S401 of FIG. 7.

It is to be noted that the local contract summary information may be stored in the consensus node (for example, in the node memory) in the form of table storage, key-value (KV) storage, file storage, or the like. This is not limited in the present disclosure. In an implementation, the local contract summary information may be stored in the form of KV storage. In this way, during subsequent synchronization or invocation of a local contract, a corresponding value (for example, a contract identifier of a local contract in a relationship mapping table) may be queried quickly through a set Key (for example, a contract identifier of a on-chain contract in the relationship mapping table).

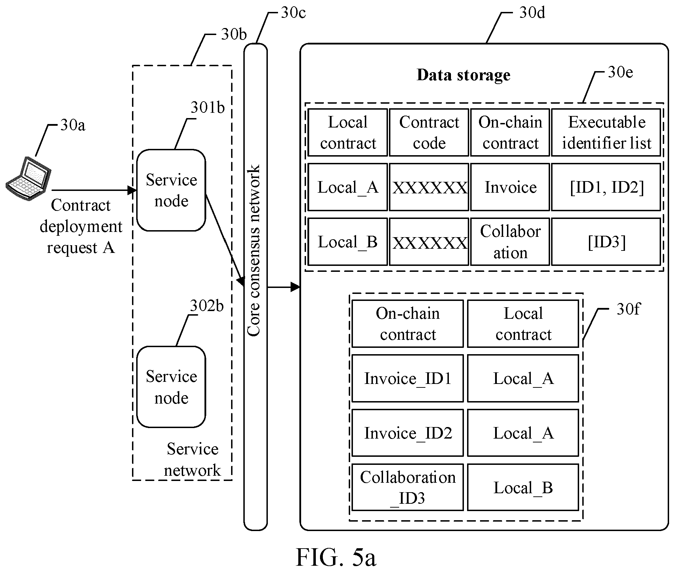

For ease of understanding, reference is made to FIGS. 5a-5c together. FIGS. 5a-5c are schematic diagrams of a data processing scenario according to an embodiment of the present disclosure. As shown in FIG. 5a, a user terminal 30a (referred to as a second user terminal) initiates a contract deployment request A. The contract deployment request A is used for deploying two local contracts (referred to as preset local contracts): local contract L1 and local contract L2. A contract identifier of local contract L1 is "Local_A", and local contract L1 is associated with on-chain contract C1 having a contract identifier "invoice". A contract identifier of local contract L2 is "Local B", and local contract L2 is associated with on-chain contract C2 having a contract identifier "collaboration". It is to be understood that on-chain contract C1 may be used for processing services relevant to invoices (namely, electronic bills), such as invoicing and invoice reimbursement. On-chain contract C2 may be used for processing collaborative services between different service objects/enterprises/institutions/units (such as multi-party collaborative processing of electronic files). For example, if service object 1 and service object 2 need to jointly sign a contract, on-chain contract C2 is invoked to transfer the contract signed by service object 1 to service object 2 to continue signing.

As shown in FIG. 5a, a user terminal 30a may transmit a contract deployment request A to a service network 30b. The service network 30b may include service node 301b and service node 302b. It is to be understood that the service network 30b may further include other service nodes not shown in FIG. 5a, for example, service node 303b, ..., service node 30mb. Any one of the service nodes (for example, service node 301b) in the service network 30b may obtain the contract deployment request A. In this embodiment of the present disclosure, if service node 301b successfully receives the contract deployment request A, service node 301b may forward the contract deployment request A to a core consensus network 30c. The core consensus network 30c may include a plurality of consensus nodes which are not shown in FIG. 5a, for example, consensus node 301c, consensus node 302c, ..., consensus node 30nc. Each consensus node in the core consensus network 30c may obtain the contract deployment request A. This is illustrated with consensus node 301c. After receiving the contract deployment request A, consensus node 301c may broadcast the contract deployment request A to other consensus nodes in the core consensus network 30c, so that each consensus node may verify the contract deployment request A (for example, terminal signature verification, deployment permission verification, or the like). When the verification is successful (referred to as consensus reaching), consensus node 301c may generate local contract summary information 30d based on the contract deployment request A, and store the local contract summary information 30d in a node memory of consensus node 301c. It is to be understood that the node memory of other consensus nodes also stores the same data as the local contract summary information 30d.

As shown in FIG. 5a, the local contract summary information 30d may include a summary contract information table 30e and a summary relationship mapping table 30f. In this embodiment of the present disclosure, the summary contract information table 30e and the summary relationship mapping table 30f both store data in the form of key-value storage. The summary contract information table 30e may store contract information corresponding to each of local contract L1 and local contract L2, for example, a corresponding contract identifier, a contract code (including a code of a contract function), a contract identifier of an associated on-chain contract, and an execution identifier list. The execution identifier list (referred to as an executable node identifier list) may include a node identifier corresponding to a service node specified to deploy the local contract. For example, in the contract deployment request A, local contract L1 is specified to be deployed on service node 301b and service node 302b. At this moment, the execution identifier list corresponding to local contract L1 may include node identifier ID1 corresponding to service node 301b and node identifier ID2 corresponding to service node 302b. However, when it is specified in the contract deployment request A that local contract L2 is deployed on service node 303b, the execution identifier list corresponding to local contract L2 may include node identifier ID3 corresponding to service node 303b. The summary relationship mapping table 30f may store a mapping relationship relevant to local contract L1 and local contract L2. For example, when local contract L1 is associated with on-chain contract C1 with the contract identifier "invoice", the summary relationship mapping table 30f may store a mapping relationship between the contract identifier "invoice" and the contract identifier "Local_A". In addition, in order to facilitate subsequent contract synchronization, a mapping relationship between a node identifier (for example, ID1 or ID2) of the service node deployed with local contract L1 and the contract identifier "Local_A" may also be stored in the summary relationship mapping table 30f.

In step S202, a contract synchronization request is transmitted to the consensus node so that the consensus node performs consensus on the contract synchronization request, local contract information transmitted by the consensus node is obtained when the contract synchronization request reaches the consensus, the local contract information is stored into a node memory of a service node, and a target local contract is deployed based on the local contract information.

It is to be understood that only when the preset local contract is actually deployed to the corresponding service node, the local contract can be invoked subsequently. Any service node in the service network may transmit a contract synchronization request to the consensus node in the core consensus network through the routing node in the routing network, or directly transmit the contract synchronization request to the consensus node in the core consensus network without the aid of the routing node, so as to synchronize contract information corresponding to the preset local contract required to be deployed on the service node. After receiving the contract synchronization request, any consensus node in the core consensus network may broadcast the contract synchronization request to other consensus nodes, so that the consensus node may perform consensus on the contract synchronization request. The contract synchronization request includes a service node identifier corresponding to the service node. Thus, when the contract synchronization request reaches the consensus, the consensus node may obtain local contract information relevant to the service node identifier from the local contract summary information stored in the node memory thereof based on the service node identifier, and may return (or directly return) the local contract information to the service node via the routing node. At this moment, the service node may store the received local contract information in the node memory of the service node, and may create a corresponding preset local contract (for example, a target local contract) based on the local contract information.

It is to be noted that for a preset local contract, only a contract synchronization request transmitted by a service node having an execution permission for the preset local contract can reach the consensus. That is to say, the consensus node is required to verify whether each service node that transmits the contract synchronization request has a permission to deploy a certain preset local contract. The implementation for the consensus node to perform consensus on the contract synchronization request and obtain local contract information may be described with reference to the corresponding step S402 of FIG. 7.

This is illustrated with a service node specified to deploy a target local contract. When the contract synchronization request transmitted by the service node to the consensus node reaches the consensus, local contract information transmitted by the consensus node may be obtained. The local contract information may include information of the target local contract and other local contracts also deployed on the service node. Therefore, the local contract information may include a relationship mapping table and a local contract information table. The relationship mapping table may store a first mapping relationship between a first contract identifier and a second contract identifier, and a second mapping relationship between the second contract identifier and a service node identifier (namely, a node identifier of the service node). The local contract information table may include a contract information column corresponding to the target local contract.

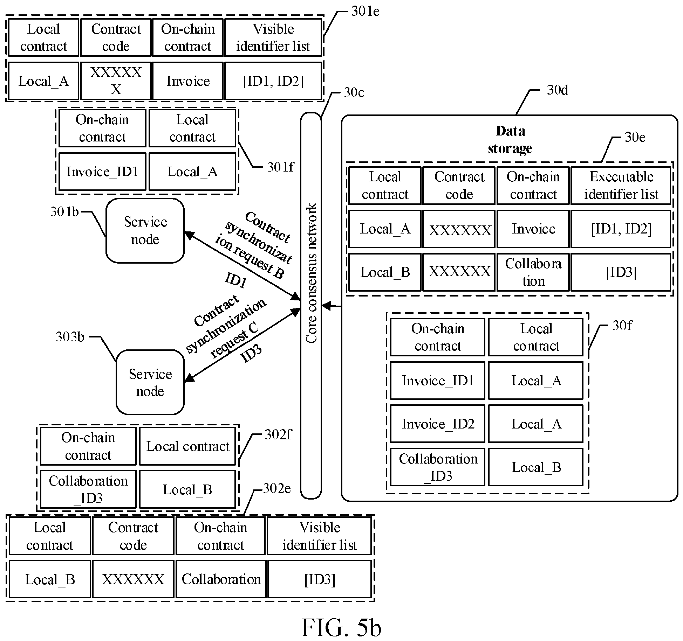

In this embodiment of the present disclosure, for the purpose of distinguishing, the service node which obtains and forwards the contract deployment request may be referred to as a first service node (for example, service node 301b in FIG. 5a), and the service node which transmits the contract synchronization request (for example, service node 301b and service node 303b in FIG. 5b) may be referred to as a second service node. The first service node and the second service node may both be any service node in the service network. The first service node and the second service node may be the same service node or may be different service nodes.

To facilitate understanding, reference is made to FIG. 5b. As shown in FIG. 5b, the consensus node (for example, consensus node 301c) in the core consensus network 30c generates the local contract summary information 30d based on the contract deployment request A forwarded by service node 301b in conjunction with the foregoing description in FIG. 5a. In addition, service nodes in the service network 30b (for example, service node 301b and service node 303b) may synchronize relevant contract information locally. For example, service node 301b transmits a contract synchronization request B carrying node identifier ID1 to the core consensus network 30c, and the consensus node in the core consensus network 30c may perform consensus on the contract synchronization request B. When the consensus is reached, any consensus node (for example, consensus node 301c) may query information relevant to node identifier ID1 in the local contract summary information 30d. For example, consensus node 301c may query a mapping relationship column including node identifier ID1 in the summary relationship mapping table 30f, and take the mapping relationship column as a relationship mapping table 301f. The relationship mapping table 301f stores a mapping relationship between node identifier ID1 and the contract identifier "Local_A", and a mapping relationship between the contract identifier "invoice" and the contract identifier "Local_A". Furthermore, the consensus node may query a contract information column having the contract identifier "Local_A" in the summary contract information table 30e based on the contract identifier "Local_A", and take the contract information column as a local contract information table 301e. The local contract information table 301e stores contract information related to local contract L1. Consensus node 301c may then return the relationship mapping table 301f and the local contract information table 301e as local contract information to service node 301b, and the service node 301b may deploy local contract L1 based on the relationship mapping table 301f and the local contract information table 301e. Similarly, service node 303b may also transmit a contract synchronization request C carrying node identifier ID3 to the core consensus network 30c, and may finally obtain a relationship mapping table 302f and a local contract information table 302e. Then, local contract L2 may be deployed based on the relationship mapping table 302f and the local contract information table 302e. It is to be understood that local contract L1 and local contract L2 may also be deployed on service node 302b via a similar process.

In step S203, an initial contract invocation request for executing a transaction service is obtained; in the relationship mapping table, a contract identifier having the first mapping relationship with the first contract identifier is queried; the queried contract identifier is determined as the second contract identifier associated with the target on-chain contract; a local contract corresponding to the second contract identifier is determined as the target local contract; the target local contract is invoked to execute a local service indicated by the transaction service to obtain a local transaction execution result; a target contract invocation request for being transmitted to the consensus node is determined based on the local transaction execution result and the initial contract invocation request, and the target contract invocation request is forwarded to the consensus node.

It is to be noted that the implementation process of step S203 is similar to the implementation process of step S103, and will not be repeated herein.

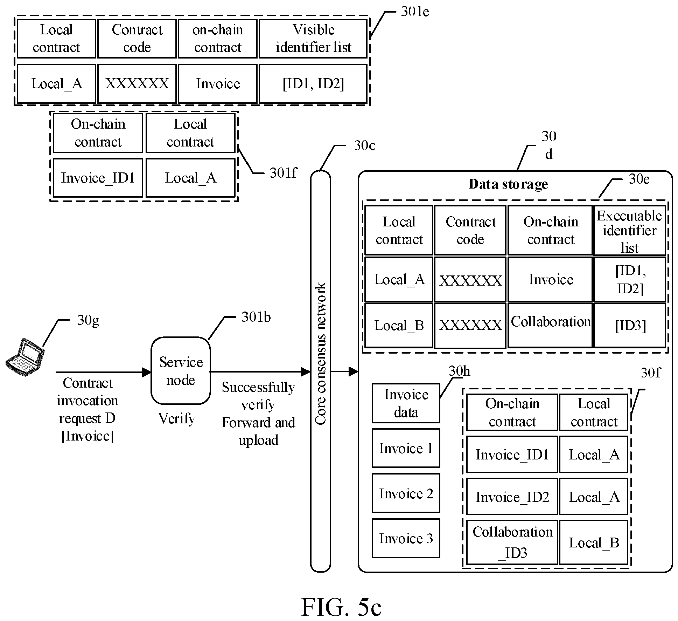

In a scenario where the local service is pre-checked, reference is made to FIG. 5c. As shown in FIG. 5c, in conjunction with the foregoing description in FIG. 5b, service node 301b has successfully deployed local contract L1 (referred to as a target local contract) based on the relationship mapping table 301f and the local contract information table 301e. Then a user terminal 30g (referred to as a first user terminal) may transmit a contract invocation request D (referred to as an initial contract invocation request) carrying the contract identifier "invoice" (referred to as a first contract identifier) to service node 301b. Thus, service node 301b may search for the contract identifier "Local_A" (referred to as a second contract identifier) having a mapping relationship with the contract identifier "invoice" in the relationship mapping table 301f, and then may search for a contract information column having the contract identifier "Local_A" in the local contract information table 301e according to the contract identifier "Local_A". Therefore, local contract L1 may be obtained according to the contract identifier "Local_A", and local contract L1 may be invoked to read a contract code of a pre-checking function S in the contract information column. Subsequently, service node 301b may access local service data T (referred to as first local service data) in the node memory of service node 301b through the pre-checking function S, may further perform pre-checking processing on the request parameter in the contract invocation request D based on the local service data T (for example, checking the request parameter), and may determine the request parameter which is checked successfully (referred to as satisfying the uploading condition) as a local transaction execution result R. Here, service node 301b may obtain a contract invocation request D' (referred to as a target contract invocation request) based on the local transaction execution result R and the contract invocation request D. It is to be understood that the contract invocation request D' and the contract invocation request D are the same request at this moment. Finally, service node 301b may forward the contract invocation request D' to the core consensus network 30c to continue processing. Subsequently, the consensus node in the core consensus network 30c may invoke on-chain contract C1 corresponding to the contract identifier "invoice" to execute a service (such as the consensus service) relevant to the invoice, thus obtaining invoice data 30h (referred to as a chain transaction execution result). For example, the invoice data may include invoice 1, invoice 2, and invoice 3. Then the consensus node may package the invoice data 30h into a to-be-uploaded block and upload the to-be-uploaded block. It is to be understood that service node 302b deployed with local contract L1 may also process the contract invocation request D through a similar process, and service node 302b and service node 301b are not aware of each other and perform corresponding pre-checking processing independently.

The local contract-based data processing method according to this embodiment of the present disclosure may be applied to a blockchain system with unequal nodes. And, in this embodiment of the present disclosure, the local contract may be executed on service nodes at different levels. Moreover, the service node may perform corresponding processing (for example, pre-checking processing, information completion processing, or the like) on the received contract invocation request before the consensus node invokes the local contract, and it is not necessary to perform all the operations relevant to the contract invocation request on the consensus node. Thus, the operation pressure of the consensus node can be reduced, and the overall transaction processing efficiency of the blockchain network can be improved. In addition, when the local contract is executed, the service node uses data thereof (referred to as local service data), so that the resource consumption caused by uploading of the local service data can be reduced, the resource consumption caused by multi-party interaction can be reduced, the data privacy security can be improved, and the storage pressure of the consensus node can be reduced.

Reference is made to FIG. 6. FIG. 6 is a schematic flowchart of a smart contract-based data processing method according to an embodiment of the present disclosure. As shown in FIG. 6, the smart contract-based data processing method may be performed by a consensus node in a core consensus network. The consensus node may access to a server in the core consensus network and may also access to a user terminal in the core consensus network. The specific form of the consensus node is not limited herein. The consensus node may be any node in the core consensus network in FIG. 1, for example, node 120a, and the consensus node is deployed with a target on-chain contract. The consensus node method may include at least the following steps S301 to S303 to be described respectively:
In step S301, a target contract invocation request for executing a transaction service is obtained.

In this embodiment of the present disclosure, a consensus node may receive a target contract invocation request for performing a transaction service. The target contract invocation request refers to a request determined by a service node in a service network independent of a core consensus network based on a local transaction execution result and an initial contract invocation request. The local transaction execution result is obtained by the service node invoking a target local contract to execute a local service indicated by the transaction service. The target local contract is obtained by the service node based on a second contract identifier. The second contract identifier is a contract identifier that is queried by the service node in the service node (for example, in a node memory) based on a first contract identifier and a first mapping relationship and is associated with a target on-chain contract. The first contract identifier refers to a contract identifier for invoking the target on-chain contract in the initial contract invocation request. The initial contract invocation request is used for executing the transaction service. The target on-chain contract is deployed on the consensus node. Both the consensus node and the service node (for example, the node memory) store the first mapping relationship between the first contract identifier and the second contract identifier. The second contract identifier is a contract identifier of the target local contract deployed on the service node. The process of performing, by the service node, smart contract-based data processing may be described with reference to the corresponding description of FIG. 3, and will not be repeated herein. It is to be understood that the target contract invocation request carries the first contract identifier.

In step S302, a target on-chain contract is invoked based on a first contract identifier in the target contract invocation request, and by invoking the target on-chain contract, a consensus service indicated by the transaction service is executed to obtain a chain transaction execution result.

It is to be understood that the consensus node may search a plurality of deployed on-chain contracts based on the first contract identifier, and may then determine the on-chain contract corresponding to the first contract identifier as the target on-chain contract. Thus, the consensus node may invoke the target on-chain contract to read a on-chain contract function in the consensus node (for example, in the node memory), may access consensus service data associated with the consensus service in the consensus node (for example, in the node memory) through the on-chain contract function, and may then execute the consensus service indicated by the transaction service through the consensus service data to obtain a chain transaction execution result. The consensus service refers to a service executed by the consensus node (such as transferring virtual assets or issuing an electronic bill), and the content of the consensus service is relevant to the transaction service. This is not limited in the present disclosure. In addition, for a on-chain contract required for data reading, each consensus node may read data by accessing a corresponding account book during service execution.

In step S303, a block to be added to a target blockchain is generated according to the chain transaction execution result, and the block is uploaded, the target blockchain is a blockchain to which the target on-chain contract belongs.

In this embodiment of the present disclosure, the consensus node may generate target transaction data according to the chain transaction execution result, and may broadcast the target transaction data to other consensus nodes. Subsequently, each consensus node may put the target transaction data into a respective transaction pool for subsequent packaging processing. It is to be understood that a node may be selected from a plurality of consensus nodes as a first consensus node (also referred to as a packing node and a block generation node) through a consensus algorithm (for example, leader block generation, round-robin block generation, computing power competition block generation, or the like). After obtaining an accounting right, the first consensus node may extract a certain amount of transaction data from the transaction pool thereof for packaging. When the target transaction data is packaged into a new block (referred to as a to-be-uploaded block), the first consensus node may broadcast the to-be-uploaded block to the second consensus node (namely, a node other than the first consensus node in the core consensus network). Subsequently, the second consensus node may perform block consensus on the to-be-uploaded block to obtain a block consensus result, and may return a block consensus result to the first consensus node. If the block consensus result is a consensus reaching result, the first consensus node may add the to-be-uploaded block to the blockchain to which the target on-chain contract belongs.

It is to be understood that the target local contract is required to be deployed on the service node before performing steps S301-S303. Reference is made to FIG. 7. FIG. 7 is a schematic flowchart of another smart contract-based data processing method according to an embodiment of the present disclosure. As shown in FIG. 7, the smart contract-based data processing method may be performed by a consensus node in a core consensus network. The smart contract-based data processing method may include at least the following steps S401 to S403 to be described respectively:
In step S401, a contract deployment request that is transmitted by a second user terminal and forwarded by a service node is obtained, consensus is performed on the contract deployment request, when the contract deployment request reaches the consensus, local contract summary information corresponding to one or more preset local contracts is generated according to the contract deployment request, and the local contract summary information is stored into a consensus node.

In this embodiment of the present disclosure, the second user terminal may transmit a contract deployment request for deploying one or more preset local contracts to the service node. After being successfully received by the service node, the contract deployment request may be forwarded (or directly transmitted) to the consensus node through a routing node in a routing network, and then the consensus node may receive the contract deployment request. The one or more preset local contracts include a target local contract. It is to be understood that the contract deployment request may include a contract key field respectively corresponding to each preset local contract. The contract key field may include at least the following fields: a local contract identifier (local contract ID, or referred to as a local contract number), a local contract version number (version), a local contract type (type), a local contract code (code), local contract description information (Desc), an associated contract identifier (on-chain contract ID), and an executable node identifier list (executable node list). The local contract type may be used for marking invocation timing of each preset local contract. For example, a local contract of which the local contract type is type A may be invoked before data is forwarded to the core consensus network, and a local contract of which the local contract type is type B may be invoked after the data is synchronized back to the service node. The local contract description information may be used for describing the function of each preset local contract. Certainly, the contract keyword field may also not include the local contract description information. The associated contract identifier refers to a contract identifier of a on-chain contract associated with each preset local contract deployed on the consensus node. The executable node identifier list may include one or more executable node identifiers. The executable node identifiers refer to node identifiers corresponding to nodes having an execution permission for each preset local contract (namely, a service object specifies a service node required to deploy each preset local contract). The executable node identifier list corresponding to the target local contract includes service node identifiers.

In addition, the contract deployment request may also include common fields such as terminal signature information, terminal identifiers, and request timestamps corresponding to the second user terminal (namely, a request initiator). Based on this, the consensus node may perform consensus on both the terminal signature information and the terminal identifiers. Here, the consensus node may recalculate expected signature information of the contract deployment request based on a private key used by the second user terminal when signing the contract deployment request, and may then compare the signature information with the terminal signature information. If a comparison result is consistent, it is determined that the contract deployment request passes security verification (referred to as consensus reaching), and it is indicated that the contract deployment request has not been tampered with in the network transmission process. Otherwise, the consensus node may reject the contract deployment request, and may return request rejection information to the second user terminal according to the comparison result. In addition, the consensus node may also obtain a deployment permission of the second user terminal through the terminal identifier, and identify the deployment permission. If it is identified that the deployment permission is a valid permission, it may be determined that the contract deployment request passes permission verification (referred to as consensus reaching), and it is indicated that the second user terminal has a permission to deploy a local contract to a specified service node. Otherwise, the consensus node may reject the contract deployment request, and may return request rejection information to the second user terminal according to an identification result. It is to be understood that there may be different levels of deployment of local contracts in different service scenarios, and therefore the deployment permission of the second user terminal may be relevant to the level thereof.

In this embodiment of the present disclosure, when both the terminal signature information and the terminal identifiers reach the consensus, the consensus node may generate a summary relationship mapping table according to the local contract identifiers, the associated contract identifiers, and the executable node identifier lists corresponding to all the preset local contracts in the contract deployment request. The summary relationship mapping table may include mapping relationship columns respectively corresponding to each preset local contract. Each mapping relationship column may be used for storing a mapping relationship between the local contract identifier and the associated contract identifier of the preset local contract corresponding thereto, and a mapping relationship between the local contract identifier and the corresponding executable node identifier. For example, reference is made to FIG. 5a again. As shown in FIG. 5a, local contract L1 and local contract L2 are two preset local contracts, and a consensus node (for example, consensus node 301c) in the core consensus network 30c may generate the summary relationship mapping table 30f according to the contract deployment request A. The summary relationship mapping table 30f may include a mapping relationship between the contract identifier "Local_A" (namely, a local contract identifier corresponding to local contract L1) and the contract identifier "invoice" (namely, an associated contract identifier corresponding to local contract L1), and a mapping relationship between the contract identifier "Local_A" and node identifiers ID1 and ID2 (namely, executable node identifiers corresponding to local contract L1), as well as a mapping relationship between the contract identifier "Local_B" (namely, a local contract identifier corresponding to local contract L2) and the contract identifier "collaboration" (namely, an associated contract identifier corresponding to local contract L2), and a mapping relationship between the contract identifier "Local_B" and node identifier ID3 (namely, an executable node identifier corresponding to local contract L2).

Meanwhile, the consensus node may generate a summary contract information table according to the local contract identifiers, the local contract codes, the associated contract identifiers, and the executable node identifier lists corresponding to all the preset local contracts. The summary contract information table may include contract information columns respectively corresponding to each preset local contract. As shown in FIG. 5a, the consensus node (for example, consensus node 301c) in the core consensus network 30c may generate the summary contract information table 30e according to the contract deployment request A. The summary contract information table 30e stores contract information columns respectively corresponding to local contract L1 and local contract L2. For example, the contract information columns corresponding to local contract L1 may include a contract identifier "Local_A" (namely, a local contract identifier), a contract code "XXXXXX" (namely, a local contract code), a contract identifier "invoice" (namely, an associated contract identifier), and an executable node identifier list [ID1, ID2].

In this embodiment of the present disclosure, the consensus node may determine the foregoing summary relationship mapping table and summary contract information table as local contract summary information (for example, the local contract summary information 30d shown in FIG. 5a) corresponding to one or more preset local contracts, and may then store the local contract summary information into the node memory of the consensus node.

In step S402, a contract synchronization request transmitted by the service node is obtained, consensus on the contract synchronization request is performed, when the contract synchronization request reaches the consensus, local contract information is obtained from the local contract summary information based on the service node identifier, and the local contract information is transmitted to the service node.

It is to be understood that the consensus node is configured to synchronize a local contract to a service node that may execute this local contract. At the time of synchronization, the consensus node may quickly calculate the service node which may obtain the local contract information by accessing the executable node identifier list at the time of local contract deployment, including: The consensus node may obtain a contract synchronization request transmitted by the service node. The contract synchronization request may include a service node identifier and node signature information of the service node. Then, consensus may be performed on the node signature information and the service node identifier. Here, the consensus node may recalculate expected signature information of the contract synchronization request based on a private key used by the service node when signing the contract synchronization request, and may then compare the signature information with the node signature information. If a comparison result is consistent, it is determined that the contract synchronization request passes security verification, and it is indicated that the contract synchronization request has not been tampered with in the network transmission process. Otherwise, the consensus node may reject the contract synchronization request, and may return request rejection information to the service node according to the comparison result. In addition, the consensus node may also obtain an execution permission of the service node through the service node identifier, and identify the execution permission. It is to be understood that the consensus node may query whether the service node identifier exists in the executable node identifier list respectively corresponding to one or more preset local contracts. If the service node identifier is queried, the execution permission may be identified as a valid permission. That is, it is determined that the contract synchronization request passes permission verification, and it is indicated that the service node has a permission to deploy and execute a specified local contract. Otherwise, the consensus node may reject the contract synchronization request, and may return request rejection information to the service node according to an identification result.

In this embodiment of the present disclosure, when both the node signature information and the service node identifier reach the consensus, the consensus node may perform querying in the summary relationship mapping table based on the service node identifier, and determine a queried mapping relationship column of a node identifier which is the same as the service node identifier as a relationship mapping table. Thus, the consensus node may determine a local contract identifier in the relationship mapping table as a key contract identifier, perform querying in the summary contract information table based on the key contract identifier, and determine a queried contract information column of a contract identifier which is the same as the key contract identifier as a local contract information table. Subsequently, the consensus node may determine the relationship mapping table and the local contract information table as the local contract information, and may transmit the local contract information to the service node. The relationship mapping table stores a first mapping relationship between a first contract identifier and a second contract identifier, and a second mapping relationship between the second contract identifier and the service node identifier. The local contract information table may include a contract information column corresponding to the target local contract. After receiving the local contract information, the service node may store the local contract information in the node memory of the service node, and may then deploy one or more local contracts including the target local contract based on the local contract information.

For example, reference may be made to FIG. 5b. As shown in FIG. 5b, service node 301b may transmit the contract synchronization request B to the consensus node (for example, consensus node 301c) in the core consensus network 30c. When the contract synchronization request B reaches the consensus, consensus node 301c may first query the contract identifier "Local_A" (namely, a key contract identifier) having a mapping relationship with node identifier ID1 of service node 301b in the summary relationship mapping table 30f, and may determine a mapping relationship column storing the mapping relationship as the relationship mapping table 301f. Further, querying may be performed in the summary contract information table 30e according to the contract identifier "Local_A", and the contract information column where the contract identifier "Local_A" exists may be determined as the local contract information table 301e. Subsequently, the relationship mapping table 301f and the local contract information table 301e may be returned to service node 301b.

In this embodiment of the present disclosure, a long connection may be established between the service node and the consensus node, and then the consensus node may actively push corresponding local contract information to a service node having an execution permission (namely, a service node corresponding to an executable node identifier stored in local contract summary information) at intervals, so that these service nodes may store the local contract information into a node memory of the service node, and deploy a specified local contract based on the local contract information.

It is to be noted that after the local contract information is successfully synchronized, the consensus node may delete the local contract information in the node memory thereof, so as to reduce the pressure of data storage. In addition, the service node is in a public network (referred to as a service network) and may be accessed by other network terminals to cause tampering of the local contract information. Therefore, after the local contract information is successfully synchronized, the consensus node may still retain the local contract information in the node memory thereof, and may subsequently perform relevant verification based on the stored local contract information.

It is to be understood that when an already deployed local contract is modified (updated or deleted), the execution logic of the local contract may also be changed by initiating a request. The process is similar to the process of deploying the local contract.

In step S403, a target contract invocation request for executing a transaction service is obtained, a target on-chain contract is invoked based on a first contract identifier in the target contract invocation request, by invoking the target on-chain contract, a consensus service indicated by the transaction service is executed to obtain a chain transaction execution result, a block to be added to a target blockchain is generated according to the chain transaction execution result, and the block is uploaded.

It is to be noted that the implementation process of step S403 may be described with reference to the corresponding step S303 of FIG. 6, and will not be repeated herein.

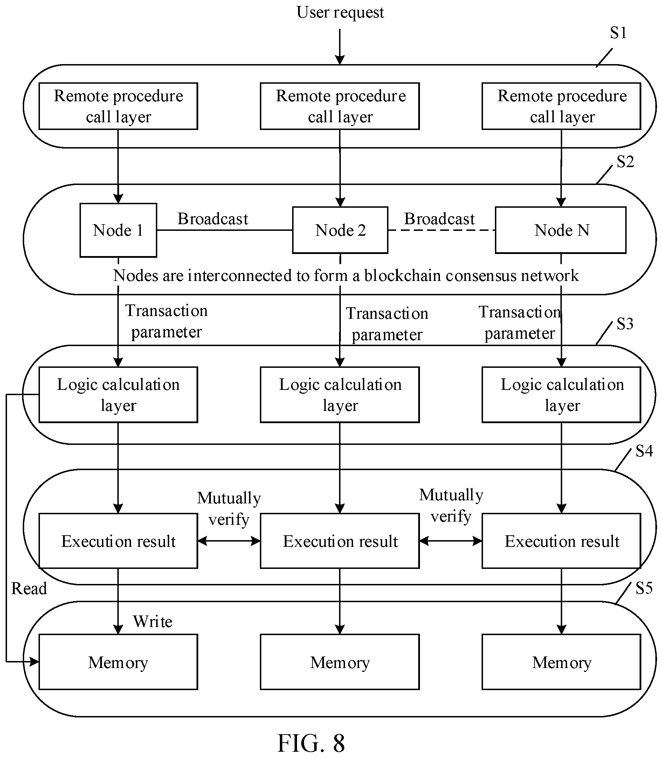

Reference is made to FIG. 8. FIG. 8 is a schematic flowchart of a data processing method according to an embodiment of the present disclosure. The data processing method may be performed by any consensus node in a blockchain network. As shown in FIG. 8, the data processing method may include the following steps S1 to S5 to be described respectively:
In step S 1, a remote procedure call (RPC) layer of each consensus node (for example, node 1 to node N) obtains a user request (for example, a target contract invocation request). The user request is also referred to as a transaction. The RPC layer is an external interface provided by consensus nodes, which may be configured to obtain the target contract invocation request.

In step S2, each consensus node broadcasts a transaction to each other, and one of the consensus nodes packages a plurality of transactions into a block (referred to as a to-be-uploaded block) and broadcasts to the other consensus nodes. The selection of a block generation node (referred to as a first consensus node) may vary depending on a consensus algorithm, and may include leader block generation, round-robin block generation, computing power competition block generation, and the like. A blockchain consensus network in FIG. 8 is the foregoing core consensus network.

In step S3, after each consensus node receives the block, the transaction in the block is started. A transaction parameter is parsed at a logic calculation layer, and a contract (referred to as a target on-chain contract) is executed. The execution process includes a process of reading data in a memory (such as a node memory). As illustrated in FIG. 8, node 1 reads historical transaction data (referred to as consensus service data) from the memory.

In step S4, after the execution of the contract is completed, each consensus node verifies an execution result (namely, the foregoing chain transaction execution result) with each other. The verification method may be that the execution result or the memory change is organized into a result tree (such as Merkle), and the root of the result tree is stored into a block header through result tree root hashing. Finally, the block hash of each consensus node is verified to be consistent.

In step S5, after the consensus is successful, each consensus node writes data relevant to this block into the memory. The data includes the block header, all transactions contained in the block, execution results, and the like.

The detailed process of steps S1-SS may be described with reference to the corresponding steps S301-S303 of FIG. 6, and will not be repeated herein.

It is to be understood that the consensus node may quickly implement the deployment and synchronization of local contracts in conjunction with the service node.

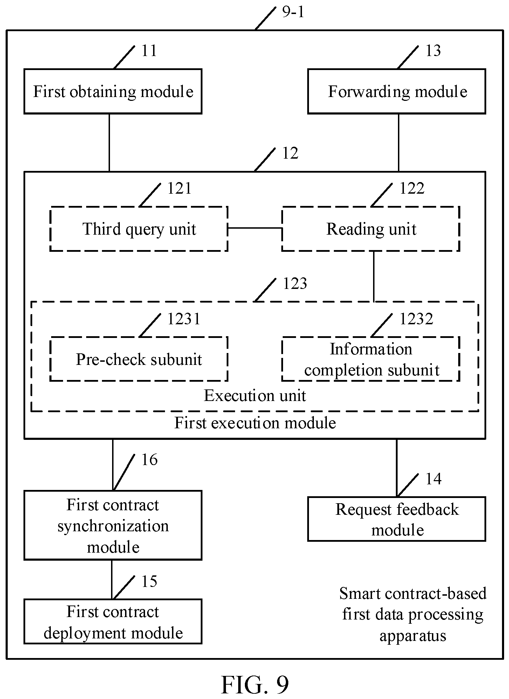

Reference is made to FIG. 9. FIG. 9 is a schematic structural diagram of a smart contract-based first data processing apparatus according to an embodiment of the present disclosure. The first data processing apparatus 9-1 may be a computer program (including program codes) running in a computer device. For example, the first data processing apparatus 9-1 is application software. The first data processing apparatus 9-1 may be configured to perform corresponding steps in the method according to the foregoing embodiment of the present disclosure. As shown in FIG. 9, the first data processing means 9-1 may run on a service node in a service network. The first data processing apparatus 9-1 may include: a first obtaining module 11, a first execution module 12, and a forwarding module 13.

The first obtaining module 11 is configured to obtain an initial contract invocation request for executing a transaction service. The initial contract invocation request includes a first contract identifier for invoking a target on-chain contract. The target on-chain contract is deployed on a consensus node of a core consensus network, and the core consensus network is independent of the service network. Both the consensus node and the service node store a first mapping relationship between the first contract identifier and a second contract identifier. The second contract identifier is a contract identifier of a target local contract deployed on the service node.

The first execution module 12 is configured to query, based on the first contract identifier and the first mapping relationship, the second contract identifier, determine the target local contract based on the second contract identifier, and execute, by invoking the target local contract, a local service indicated by the transaction service to obtain a local transaction execution result.

The forwarding module 13 is configured to transmit a target contract invocation request to the consensus node based on the local transaction execution result and the initial contract invocation request, and execute, by invoking the target on-chain contract, a consensus service indicated by the transaction service, the target contract invocation request being used for obtaining, by the consensus node, the target on-chain contract based on the first contract identifier.

In an implementation, a blockchain network where the service network and the core consensus network are located further includes a routing network for performing network isolation.

The forwarding module 13 is further configured to transmit the target contract invocation request to the consensus node through a routing node in the routing network based on the local transaction execution result and the initial contract invocation request.

Referring to FIG. 9, the first data processing apparatus 9-1 may further include: a request feedback module 14.

The request feedback module 14 is configured to: determine, in response to the pre-check result indicating that the request parameter does not satisfy the uploading condition, the request parameter not satisfying the uploading condition as an invalid request parameter, and take the invalid request parameter as the local transaction execution result corresponding to the local service; and generate request failure information according to the invalid request parameter, and return the request failure information to a first user terminal that transmits the initial contract invocation request.

Referring to FIG. 9, the first data processing apparatus 9-1 may further include: a first contract deployment module 15 and a first contract synchronization module 16.

The first contract deployment module 15 is configured to forward a contract deployment request transmitted by a second user terminal to the consensus node. The contract deployment request is used for generating, by the consensus node, local contract information corresponding to one or more preset local contracts. The one or more preset local contracts include the target local contract.

The first contract synchronization module 16 is configured to: transmit a contract synchronization request to the consensus node, the contract synchronization request being used for performing, by the consensus node, consensus on the contract synchronization request; the contract synchronization request including a service node identifier corresponding to the service node; receive local contract information transmitted by the consensus node when the contract synchronization request reaches the consensus, the local contract information referring to information obtained by the consensus node in local contract summary information based on the service node identifier; and deploy the target local contract based on the local contract information.

Referring to FIG. 9, the first execution module 12 may include: a third query unit 121, a reading unit 122, and an execution unit 123.

In an implementation, the service node stores local contract information. The local contract information includes a relationship mapping table. The relationship mapping table includes the first mapping relationship.

The third query unit 121 is configured to query, in the relationship mapping table, a contract identifier having the first mapping relationship with the first contract identifier, determining the queried contract identifier as the second contract identifier, and determine a local contract corresponding to the second contract identifier as the target local contract.

The reading unit 122 is configured to: read the local contract information by invoking the target local contract; and
obtain local service data associated with the local service by reading the local contract information.

The execution unit 123 is configured to execute, through the local service data, the local service indicated by the transaction service to obtain the local transaction execution result.

Referring to FIG. 9, the execution unit 123 may include: a pre-check subunit 1231 and an information completion subunit 1232.

In an implementation, when the local service data includes first local service data, the pre-check subunit 1231 is configured to: pre-check a request parameter in the initial contract invocation request based on the first local service data; and determine, in response to a pre-check result indicating that the request parameter satisfies an uploading condition, the request parameter satisfying the uploading condition as a valid request parameter, and take the valid request parameter as the local transaction execution result corresponding to the local service, the uploading condition being a condition for uploading indicated by the local service.

In an implementation, when the local service data includes second local service data, the information completion subunit 1232 is configured to: perform information completion on a request parameter in the initial contract invocation request based on the second local service data; and take the information-completed request parameter as the local transaction execution result corresponding to the local service.

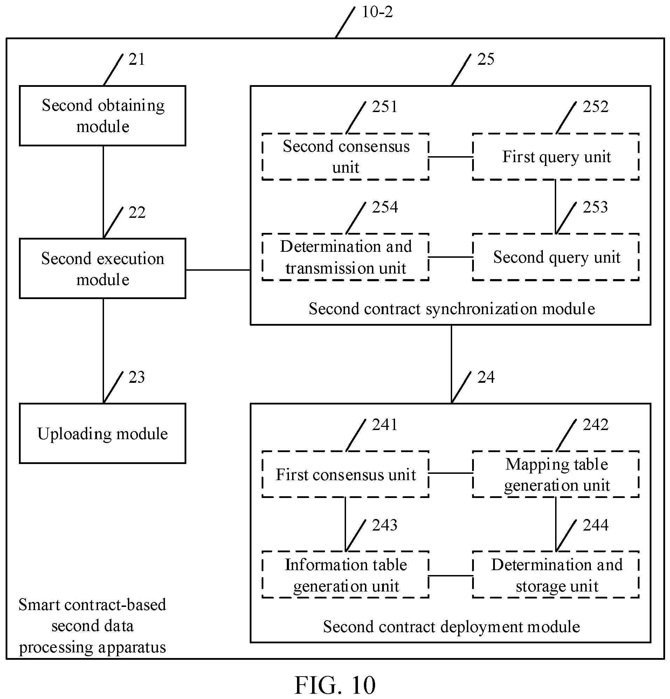

Reference is made to FIG. 10. FIG. 10 is a schematic structural diagram of a smart contract-based second data processing apparatus according to an embodiment of the present disclosure. The second data processing apparatus 10-2 may be a computer program (including program codes) running in a computer device. For example, the data processing apparatus 10-2 is application software. The second data processing apparatus 10-2 may be configured to perform corresponding steps in the method according to the foregoing embodiment of the present disclosure. As shown in FIG. 10, the second data processing means 10-2 may run on a consensus node in a core consensus network. The second data processing apparatus 10-2 may include: a second obtaining module 21, a second execution module 22, and an uploading module 23.

The second obtaining module 21 is configured to obtain a target contract invocation request for executing a transaction service. The target contract invocation request is transmitted by a service node based on a local transaction execution result and an initial contract invocation request, and the service node is located in a service network of the core consensus network. The local transaction execution result is obtained by invoking a target local contract by the service node to execute a local service indicated by the transaction service. The target local contract is obtained by the service node based on a second contract identifier. The second contract identifier is queried by the service node based on a first contract identifier and a first mapping relationship. The first contract identifier refers to a contract identifier for invoking a target on-chain contract in the initial contract invocation request. The initial contract invocation request is used for executing the transaction service. The target on-chain contract is deployed on the consensus node. Both the consensus node and the service node store the first mapping relationship between the first contract identifier and the second contract identifier. The second contract identifier is a contract identifier of the target local contract deployed on the service node.

The second execution module 22 is configured to invoke the target on-chain contract based on the first contract identifier in the target contract invocation request, and execute, by invoking the target on-chain contract, a consensus service indicated by the transaction service to obtain a chain transaction execution result.

Referring to FIG. 10, the second data processing apparatus 10-2 may further include: a second contract deployment module 24 and a second contract synchronization module 25.

The second contract deployment module 24 is configured to perform consensus on a contract deployment request forwarded by the service node, and generate, when the contract deployment request reaches the consensus, local contract summary information corresponding to one or more preset local contracts according to the contract deployment request. The contract deployment request is transmitted to the service node by a second user terminal, and the one or more preset local contracts include the target local contract.

The second contract synchronization module 25 is configured to: perform consensus on a contract synchronization request transmitted by the service node, the contract synchronization request including a service node identifier corresponding to the service node; and obtain, when the contract synchronization request reaches the consensus, local contract information from the local contract summary information based on the service node identifier, and transmit the local contract information to the service node, the local contract information being used for deploying the target local contract by the service node.

In an implementation, the contract deployment request includes a contract key field respectively corresponding to each preset local contract, and the contract key field includes a local contract identifier, a local contract version number, a local contract type, a local contract code, local contract description information, an associated contract identifier, and an executable node identifier list. The associated contract identifier refers to a contract identifier of a on-chain contract associated with each preset local contract deployed on the consensus node. The executable node identifier list includes one or more executable node identifiers. The executable node identifier refers to a node identifier corresponding to a node having an execution permission for each preset local contract. The executable node identifier list corresponding to the target local contract includes the service node identifier.

In an implementation, the contract deployment request further includes terminal signature information and a terminal identifier corresponding to the second user terminal. Referring to FIG. 10, the second contract deployment module 24 may include: a first consensus unit 241, a mapping table generation unit 242, an information table generation unit 243, and a determination and storage unit 244.

The first consensus unit 241 is configured to perform consensus on the terminal signature information and the terminal identifier.

The mapping table generation unit 242 is configured to generate, when both the terminal signature information and the terminal identifier reach the consensus, a summary relationship mapping table according to the local contract identifier, the associated contract identifier, and the executable node identifier list. The summary relationship mapping table includes mapping relationship columns respectively corresponding to the one or more preset local contracts. The mapping relationship column is used for storing a mapping relationship between the local contract identifier and the associated contract identifier, and a mapping relationship between the local contract identifier and the executable node identifier.

The information table generation unit 243 is configured to generate a summary contract information table according to the local contract identifier, the local contract code, the associated contract identifier, and the executable node identifier list. The summary contract information table includes contract information columns respectively corresponding to the one or more preset local contracts.

The determination and storage unit 244 is configured to determine the summary relationship mapping table and the summary contract information table as the local contract summary information corresponding to the one or more preset local contracts.

In an implementation, the contract synchronization request may further include node signature information.

Referring to FIG. 10, the second contract synchronization module 25 may include: a second consensus unit 251, a first query unit 252, a second query unit 253, and a determination and transmission unit 254.

The second consensus unit 251 is configured to perform consensus on the node signature information and the service node identifier.

The first query unit 252 is configured to perform, when both the node signature information and the service node identifier reach the consensus, querying in the summary relationship mapping table based on the service node identifier, and determine a queried mapping relationship column of a node identifier which is the same as the service node identifier as a relationship mapping table. The relationship mapping table stores the first mapping relationship and a second mapping relationship between the second contract identifier and the service node identifier.

The second query unit 253 is configured to determine a local contract identifier in the relationship mapping table as a key contract identifier, perform querying in the summary contract information table based on the key contract identifier, and determine a queried contract information column of a contract identifier which is the same as the key contract identifier as a local contract information table. The local contract information table includes a contract information column corresponding to the target local contract.

The determination and transmission unit 254 is configured to determine the relationship mapping table and the local contract information table as the local contract information, and transmit the local contract information to the service node.

In this embodiment of the present disclosure, the uploading module 23 is configured to generate a block to be added to a target blockchain according to the chain transaction execution result, and upload the block. The target blockchain is a blockchain to which the target on-chain contract belongs.

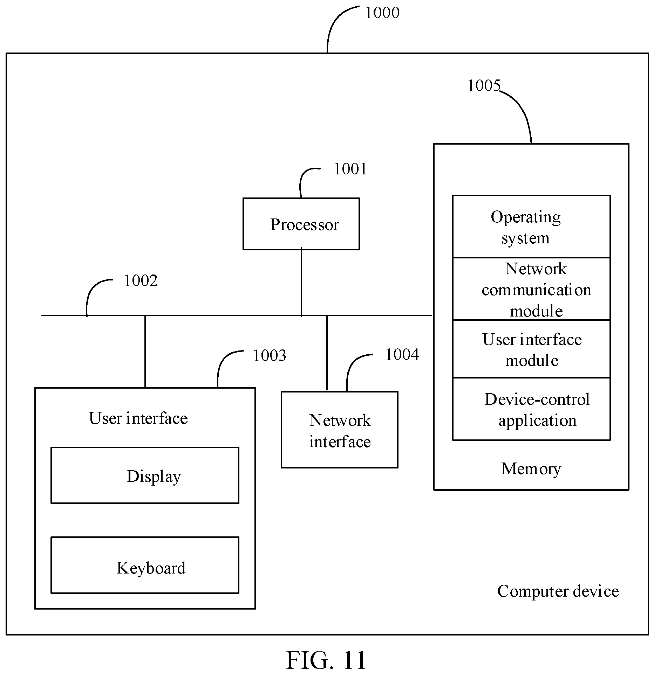

Reference is made to FIG. 11, which is a schematic structural diagram of a computer device according to an embodiment of the present disclosure. As shown in FIG. 11, the computer device 1000 may be a service node in a service network or a consensus node in a core consensus network. The computer device 1000 may include: a processor 1001, a network interface 1004, and a memory 1005. In addition, the computer device 1000 may further include: a user interface 1003 and at least one communication bus 1002. The communication bus 1002 is configured to implement connection and communication between the components. The user interface 1003 may include a display and a keyboard. Optionally, the user interface 1003 may further include a standard wired interface and wireless interface. Optionally, the network interface 1004 may include a standard wired interface and wireless interface (such as a WI-FI interface). The memory 1004 may be a high-speed random access memory (RAM), or may be a non-volatile memory, for example, at least one disk memory. Optionally, the memory 1005 may be at least one storage apparatus that is located far away from the foregoing processor 1001. As shown in FIG. 11, the memory 1005 used as a computer-readable storage medium may include an operating system, a network communication module, a user interface module, and a device-control application.

In the computer device 1000 as shown in FIG. 11, the network interface 1004 may provide a network communication function. The user interface 1003 is mainly used as an interface enabling input by a user. And the processor 1001 may be configured to invoke the device-control application stored in the memory 1005 to perform the description of the smart contract-based data processing method according to the foregoing embodiment of the present disclosure. The description will not be repeated herein. In addition, the description of the beneficial effects using the same method will not be repeated.

An embodiment of the present disclosure also provides a computer-readable storage medium. The computer-readable storage medium stores a computer program executed by the above-mentioned smart contract-based first data processing apparatus 9-1 or smart contract-based second data processing apparatus 10-2, and the computer program includes program instructions. When the processor executes the program instructions, the smart contract-based data processing method according to the foregoing embodiment of the present disclosure can be performed. Therefore, the description will not be repeated herein. In addition, the description of the beneficial effects using the same method will not be repeated. As an example, the program instructions may be deployed to be executed on one electronic device, or on a plurality of electronic devices located at one site, or on a plurality of electronic devices distributed across a plurality of sites and interconnected by a communication network. The plurality of electronic devices distributed across the plurality of sites and interconnected by the communication network may form a blockchain system.

The computer-readable storage medium may be the smart contract-based data processing apparatus according to the foregoing embodiment of the present disclosure or an internal storage unit of the computer device, such as a hard disk or an internal memory of the computer device. The computer-readable storage medium may also be an external storage device of the computer device, such as a plug-in hard disk, a smart media card (SMC), a secure digital (SD) card, or a flash card provided on the computer device. In this embodiment of the present disclosure, the computer-readable storage medium may further include both the internal storage unit and the external storage device of the computer device. The computer-readable storage medium is configured to store the computer program and other programs and data required by the computer device. The computer-readable storage medium may be further configured to temporarily store data that has been outputted or is to be outputted.

An embodiment of the present disclosure also provides a computer program product or a computer program. The computer program product or the computer program includes computer instructions. The computer instructions are stored in a computer-readable storage medium. A processor of an electronic device such as a computer device reads the computer instructions from the computer-readable storage medium. The processor executes the computer instructions, so as to enable the electronic device to perform the smart contract-based data processing method according to the foregoing embodiment of the present disclosure.

It is to be understood that data relevant to transaction services is involved in the embodiments of the present disclosure. When the embodiments of the present disclosure are applied to a particular product or technology, user approval or consent is required, and collection, use and processing of the relevant data is required to comply with relevant national and regional laws and regulations and standards.

A person of ordinary skill in the art may be aware that, units and algorithm steps of the examples described in the disclosed embodiments in this specification may be implemented by electronic hardware, computer software, or a combination thereof. To clearly describe the interchangeability between the hardware and the software, the foregoing has generally described compositions and steps of the examples based on functions. Whether these functions are executed in the manner of hardware or software depends on particular applications and design constraint conditions of the technical solutions. A person skilled in the art may use different methods to implement the described functions for each particular application, but it is not to be considered that the implementation goes beyond the scope of the present disclosure.

What is disclosed above is merely exemplary embodiments of the present disclosure, and certainly is not intended to limit the scope of the claims of the present disclosure. Therefore, equivalent variations made in accordance with the claims of the present disclosure shall fall within the scope of the present disclosure.

## Claims

1. A smart contract-based data processing method, performed by a service node in a service network, the service node comprising at least one electronic device, the method comprising:
obtaining an initial contract invocation request for executing a transaction service, the initial contract invocation request comprising a first contract identifier for invoking a target on-chain contract, the target on-chain contract being deployed on a consensus node of a core consensus network, the core consensus network being independent of the service network, both the consensus node and the service node storing a first mapping relationship between the first contract identifier and a second contract identifier, the second contract identifier being a contract identifier of a target local contract deployed on the service node;
querying, based on the first contract identifier and the first mapping relationship, the second contract identifier, determining the target local contract based on the second contract identifier, and executing, by invoking the target local contract, a local service indicated by the transaction service to obtain a local transaction execution result;
transmitting a target contract invocation request to the consensus node based on the local transaction execution result and the initial contract invocation request, and executing, by invoking the target on-chain contract, a consensus service indicated by the transaction service, the target contract invocation request being used for invoking, by the consensus node, the target on-chain contract based on the first contract identifier.

2. The method according to claim 1, wherein the service node stores local contract information; the local contract information comprises a relationship mapping table; the relationship mapping table comprises the first mapping relationship; and
the querying, based on the first contract identifier and the first mapping relationship, the second contract identifier and determining the target local contract based on the second contract identifier comprises:
querying, in the relationship mapping table, a contract identifier having the first mapping relationship with the first contract identifier, determining the queried contract identifier as the second contract identifier, and determining a local contract corresponding to the second contract identifier as the target local contract.

3. The method according to claim 2, wherein the executing, by invoking the target local contract, a local service indicated by the transaction service to obtain a local transaction execution result comprises:
reading the local contract information by invoking the target local contract;
obtaining local service data associated with the local service by reading the local contract information; and
executing, through the local service data, the local service indicated by the transaction service to obtain the local transaction execution result.

4. The method according to claim 3, wherein when the local service data comprises first local service data, the executing, through the local service data, the local service indicated by the transaction service to obtain the local transaction execution result comprises:
pre-checking a request parameter in the initial contract invocation request based on the first local service data; and
determining, in response to a pre-check result indicating that the request parameter satisfies an uploading condition, the request parameter satisfying the uploading condition as a valid request parameter, and taking the valid request parameter as the local transaction execution result corresponding to the local service, the uploading condition being a condition for uploading indicated by the local service.

5. The method according to claim 4, wherein the method further comprises:
determining, in response to the pre-check result indicating that the request parameter does not satisfy the uploading condition, the request parameter not satisfying the uploading condition as an invalid request parameter, and taking the invalid request parameter as the local transaction execution result corresponding to the local service; and
generating request failure information according to the invalid request parameter, and returning the request failure information to a first user terminal that transmits the initial contract invocation request.

6. The method according to claim 3, wherein when the local service data comprises second local service data, the executing, through the local service data, the local service indicated by the transaction service to obtain the local transaction execution result comprises:
performing information completion on a request parameter in the initial contract invocation request based on the second local service data; and
taking the information-completed request parameter as the local transaction execution result corresponding to the local service.

7. The method according to claim 1, wherein a blockchain network where the service network and the core consensus network are located further comprises a routing network for performing network isolation; and
the transmitting a target contract invocation request to the consensus node based on the local transaction execution result and the initial contract invocation request comprises:
transmitting the target contract invocation request to the consensus node through a routing node in the routing network based on the local transaction execution result and the initial contract invocation request.

8. The method according to claim 1, wherein the method further comprises:
forwarding a contract deployment request transmitted by a second user terminal to the consensus node, the contract deployment request being used for generating, by the consensus node, local contract information corresponding to one or more preset local contracts, the one or more preset local contracts comprising the target local contract;
transmitting a contract synchronization request to the consensus node, the contract synchronization request being used for performing, by the consensus node, consensus on the contract synchronization request, the contract synchronization request comprising a service node identifier corresponding to the service node;
receiving local contract information transmitted by the consensus node when the contract synchronization request reaches the consensus, the local contract information referring to information obtained by the consensus node in local contract summary information based on the service node identifier; and
deploying the target local contract based on the local contract information.

9. A smart contract-based data processing method, performed by a consensus node in a core consensus network, the consensus node comprising at least one electronic device, the method comprising:
obtaining a target contract invocation request for executing a transaction service, the target contract invocation request being transmitted by a service node based on a local transaction execution result and an initial contract invocation request, the service node being located in a service network of the core consensus network, the local transaction execution result being obtained by invoking a target local contract by the service node to execute a local service indicated by the transaction service, the target local contract being obtained by the service node based on a second contract identifier, the second contract identifier being queried by the service node based on a first contract identifier and a first mapping relationship, the first contract identifier referring to a contract identifier for invoking a target on-chain contract in the initial contract invocation request, the initial contract invocation request being used for executing the transaction service, the target on-chain contract being deployed on the consensus node, both the consensus node and the service node storing the first mapping relationship between the first contract identifier and the second contract identifier, the second contract identifier being a contract identifier of the target local contract deployed on the service node; and
invoking the target on-chain contract based on the first contract identifier in the target contract invocation request, and executing, by invoking the target on-chain contract, a consensus service indicated by the transaction service to obtain a chain transaction execution result.

10. The method according to claim 9, further comprising:
performing consensus on a contract deployment request forwarded by the service node, and generating, when the contract deployment request reaches the consensus, local contract summary information corresponding to one or more preset local contracts according to the contract deployment request, the contract deployment request being transmitted to the service node by a second user terminal, the one or more preset local contracts comprising the target local contract;
performing consensus on a contract synchronization request transmitted by the service node, the contract synchronization request comprising a service node identifier corresponding to the service node; and
obtaining, when the contract synchronization request reaches the consensus, local contract information from the local contract summary information based on the service node identifier, and transmitting the local contract information to the service node, the local contract information being used for deploying the target local contract by the service node.

11. The method according to claim 10, wherein the contract deployment request comprises a contract key field respectively corresponding to each preset local contract, and the contract key field comprises a local contract identifier, a local contract version number, a local contract type, a local contract code, local contract description information, an associated contract identifier, and an executable node identifier list; the associated contract identifier refers to a contract identifier of a on-chain contract associated with each preset local contract deployed on the consensus node; the executable node identifier list comprises one or more executable node identifiers; the executable node identifier refers to a node identifier corresponding to a node having an execution permission for each preset local contract; and the executable node identifier list corresponding to the target local contract comprises the service node identifier.

12. The method according to claim 11, wherein the contract deployment request further comprises terminal signature information and a terminal identifier corresponding to the second user terminal;
the performing consensus on a contract deployment request forwarded by the service node, and generating, when the contract deployment request reaches the consensus, local contract summary information corresponding to one or more preset local contracts according to the contract deployment request comprises:
performing consensus on the terminal signature information and the terminal identifier;
generating, when both the terminal signature information and the terminal identifier reach the consensus, a summary relationship mapping table according to the local contract identifier, the associated contract identifier, and the executable node identifier list, the summary relationship mapping table comprising mapping relationship columns respectively corresponding to the one or more preset local contracts, the mapping relationship column being used for storing a mapping relationship between the local contract identifier and the associated contract identifier, and a mapping relationship between the local contract identifier and the executable node identifier;
generating a summary contract information table according to the local contract identifier, the local contract code, the associated contract identifier, and the executable node identifier list, the summary contract information table comprising contract information columns respectively corresponding to the one or more preset local contracts; and
determining the summary relationship mapping table and the summary contract information table as the local contract summary information corresponding to the one or more preset local contracts.

13. The method according to claim 12, wherein the contract synchronization request further comprises node signature information;
the performing consensus on a contract synchronization request transmitted by the service node and obtaining, when the contract synchronization request reaches the consensus, local contract information from the local contract summary information based on the service node identifier comprises:
performing consensus on the node signature information and the service node identifier;
performing, when both the node signature information and the service node identifier reach the consensus, querying in the summary relationship mapping table based on the service node identifier, and determining a queried mapping relationship column of a node identifier which is the same as the service node identifier as a relationship mapping table, the relationship mapping table storing the first mapping relationship and a second mapping relationship between the second contract identifier and the service node identifier;
determining a local contract identifier in the relationship mapping table as a key contract identifier, performing querying in the summary contract information table based on the key contract identifier, and determining a queried contract information column of a contract identifier which is the same as the key contract identifier as a local contract information table, the local contract information table comprising a contract information column corresponding to the target local contract; and
determining the relationship mapping table and the local contract information table as the local contract information.

14. The method according to claim 9, wherein after the executing, by invoking the target on-chain contract, a consensus service indicated by the transaction service to obtain a chain transaction execution result, the method further comprises:
generating a block to be added to a target blockchain according to the chain transaction execution result, and uploading the block, the target blockchain being a blockchain to which the target on-chain contract belongs.

15. A smart contract-based first data processing apparatus, stored in a service node of a service network, the first data processing apparatus comprising:
a first obtaining module, configured to obtain an initial contract invocation request for executing a transaction service, the initial contract invocation request comprising a first contract identifier for invoking a target on-chain contract, the target on-chain contract being deployed on a consensus node of a core consensus network, the core consensus network being independent of the service network, both the consensus node and the service node storing a first mapping relationship between the first contract identifier and a second contract identifier, the second contract identifier being a contract identifier of a target local contract deployed on the service node;
a second execution module, configured to query, based on the first contract identifier and the first mapping relationship, the second contract identifier, determine the target local contract based on the second contract identifier, and execute, by invoking the target local contract, a local service indicated by the transaction service to obtain a local transaction execution result; and
a forwarding module, configured to transmit a target contract invocation request to the consensus node based on the local transaction execution result and the initial contract invocation request, and execute, by invoking the target on-chain contract, a consensus service indicated by the transaction service, the target contract invocation request being used for obtaining, by the consensus node, the target on-chain contract based on the first contract identifier.

16. A smart contract-based second data processing apparatus, stored in a consensus node of a core consensus network, the second data processing apparatus comprising:
a second obtaining module, configured to obtain a target contract invocation request for executing a transaction service, the target contract invocation request being transmitted by a service node based on a local transaction execution result and an initial contract invocation request, the service node being located in a service network of the core consensus network, the local transaction execution result being obtained by invoking a target local contract by the service node to execute a local service indicated by the transaction service, the target local contract being obtained by the service node based on a second contract identifier, the second contract identifier being queried by the service node based on a first contract identifier and a first mapping relationship, the first contract identifier referring to a contract identifier for invoking a target on-chain contract in the initial contract invocation request, the initial contract invocation request being used for executing the transaction service, the target on-chain contract being deployed on the consensus node, both the consensus node and the service node storing the first mapping relationship between the first contract identifier and the second contract identifier, the second contract identifier being a contract identifier of the target local contract deployed on the service node; and
a second execution module, configured to invoke the target on-chain contract based on the first contract identifier in the target contract invocation request, and execute, by invoking the target on-chain contract, a consensus service indicated by the transaction service to obtain a chain transaction execution result.

17. An electronic device, comprising: a processor, a memory, and a network interface,
the processor being connected to the memory and the network interface, the network interface being configured to provide a data communication function, the memory being configured to store program codes, and the processor being configured to invoke the program codes to perform the smart contract-based data processing method performed by a service node in a service network according to any one of claims 1-8, or to perform the smart contract-based data processing method performed by a consensus node in a core consensus network according to any one of claims 9-14.

18. A computer-readable storage medium, storing a computer program, the computer program being adapted to be loaded by a processor and to perform the smart contract-based data processing method performed by a service node in a service network according to any one of claims 1-8, or to perform the smart contract-based data processing method performed by a consensus node in a core consensus network according to any one of claims 9-14.

19. A computer program product, comprising a computer program or instruction which, when executed by a processor, implements the smart contract-based data processing method performed by a service node in a service network according to any one of claims 1-8, or performs the smart contract-based data processing method performed by a consensus node in a core consensus network according to any one of claims 9-14.
